(19) Europäisches Patentamt
European Patent Office
Office européen des brevets

(11) EP 4 036 803 A1

(12) **EUROPEAN PATENT APPLICATION**
published in accordance with Art. 153(4) EPC

(43) Date of publication:
**03.08.2022 Bulletin 2022/31**

(21) Application number: **20868455.5**

(22) Date of filing: **22.09.2020**

(51) International Patent Classification (IPC):
**G06N 3/04** (2006.01)

(86) International application number:
**PCT/CN2020/116816**

(87) International publication number:
**WO 2021/057720 (01.04.2021 Gazette 2021/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.09.2019 CN 201910910055**

(71) Applicant: **Anhui Cambricon Information Technology Co., Ltd.**
**Hefei, Anhui 231283 (CN)**

(72) Inventors:
• **ZHANG, Xiao**
**Hefei, Anhui 231283 (CN)**
• **ZHOU, Yusong**
**Hefei, Anhui 231283 (CN)**
• **MENG, Xiaofu**
**Hefei, Anhui 231283 (CN)**

(74) Representative: **Huang, Liwei**
**Cäcilienstraße 12**
**40597 Düsseldorf (DE)**

(54) **NEURAL NETWORK MODEL PROCESSING METHOD AND APPARATUS, COMPUTER DEVICE, AND STORAGE MEDIUM**

(57) Embodiments of the present disclosure provide a neural network processing method, a neural network processing apparatus, a computer device, and a storage medium. By splitting one operator into a plurality of sub-operators with smaller scales, a calculation library under a single-core structure may be invoked directly, which may make full use of hardware resources of a multi-core processor, thereby avoiding extra workloads brought by reimplementation.

FIG. 1A

**Description**

**TECHNICAL FIELD**

The present disclosure relates to the technical field of computer technology and especially relates to a neural network model processing method, a neural network model processing apparatus, a computer device and a storage medium.

**BACKGROUND**

With the rapid development of artificial intelligence technology, a multi-core processor based on a memory-sharing model has become a mainstream structure of current processors. This multi-core structure and vector processing capabilities in each core may also be applied to neural network calculations. In practical applications, a method of data parallelism may be generally used to make full use of extra hardware resources brought by a multi-core processor structure; in other words, based on the method of data parallelism, each processor core may perform calculations of different pieces of data on a same neural network model separately at the same time. However, the multi-core processor structure may not use this parallel method to process neural network calculation tasks that have small batches of data and require a low delay in reasoning scenarios. Then, how to unify data parallelism and neural network model parallelism to make full use of hardware resources of the multi-core processor is a technical problem that is required to be solved urgently.

**SUMMARY**

Embodiments of the present disclosure provide a neural network processing method, a neural network processing apparatus, a computer device, and a storage medium. By splitting a neural network calculation task into several sub-calculation tasks with small scales, a multi-core processor may directly invoke a calculation library under a single-core structure, which may make full use of hardware resources of the multi-core processor, thereby avoiding extra workloads brought by reimplementation.

In order to achieve the above purpose, a first aspect of the present disclosure provides a neural network model processing method, which is applied to a multi-core artificial intelligence processor, and the method may include:

determining split state sets of tensor data associated with a target operator according to the target operator in a calculation graph corresponding to a neural network model;

traversing the split state sets and determining splitting paths of the tensor data of the target operator between adjacent split state sets;

determining a target splitting path of the tensor data of the target operator according to weights of the splitting paths; and

splitting the target operator according to the target splitting path to distribute the target operator to corresponding cores of the multi-core artificial intelligence processor for processing.

A second aspect of the embodiments of the present disclosure provides a neural network model processing apparatus. The apparatus may include units that are configured to perform the method of the first aspect above. Specifically, the apparatus is applied to a multi-core artificial intelligence processor. The above-mentioned apparatus may include:

a determining unit configured to determine split state sets of tensor data associated with a target operator according to the target operator in a calculation graph corresponding to a neural network model;

a splitting path determining unit configured to traverse the split state sets and determine splitting paths of the tensor data of the target operator between adjacent split state sets;

a target splitting path determining unit configured to determine a target splitting path of the tensor data of the target operator according to weights of the splitting paths; and

a processing unit configured to split the target operator according to the target splitting path to distribute the target operator to corresponding cores of the multi-core artificial intelligence processor for processing.

A third aspect of the embodiments of the present disclosure provides a chip including the neural network model processing apparatus of the second aspect.

A fourth aspect of the embodiments of the present disclosure provides a computer device including the chip of the third aspect or the neural network model processing apparatus of the second aspect.

A fifth aspect of the embodiments of the present disclosure provides a computer device including processors and a memory that are connected to each other, where the processors include a general-purpose processor and an artificial intelligence processor, and the memory is configured to store a computer program that supports the computer device to perform the method above, and the computer program includes a program instruction, and the processors are configured to invoke the program instruction and perform the method of the first aspect above.

A sixth aspect of the embodiments of the present disclosure provides a computer-readable storage medium, on which a computer program is stored, where the computer program includes a program instruction, and the program instruction enables a processor to perform the method of the first aspect above when the program instruction is executed by the processor.

A seventh aspect of the present disclosure provides a computer program product including a non-transitory computer-readable storage medium that stores a computer program, where the computer program is executed to enable a computer to perform some or all of steps of the method of the first aspect of the embodiments of the present disclosure. The computer program product may be a software installation package.

By implementing the embodiments of the present disclosure, by splitting a neural network calculation task into several sub-calculation tasks with smaller scales by a computer device, a multi-core processor may directly invoke a calculation library under a single-core structure, which may make full use of hardware resources of the multi-core processor, thereby avoiding extra workloads brought by reimplementation. Further, the computer device may adjust split states in a split state set of tensor data associated with an operator through a glue operator, and based on an updated split state set, the computer device may determine a target optimization path. In this way, extra overheads brought by introducing the glue operator and parallel efficiency of different splitting methods of the operator itself may be combined for decision, and an optimal splitting solution based on an entire neural network may be obtained, thereby improving execution efficiency of the computer device.

**BRIEF DESCRIPTION OF THE DRAWINGS**

In order to illustrate technical solutions in the embodiments of the present disclosure more clearly, drawings to be used in the description of the embodiments are briefly explained below. Obviously, the drawings in the description below are some embodiments of the present disclosure. Other drawings may be obtained according to the drawings without any creative effort by those skilled in the art.

FIG. 1A is a structural diagram of a multi-core processor, according to an embodiment of the present disclosure.

FIG. 1B is a structural diagram of a software stack for an artificial intelligence processor, according to an embodiment of the present disclosure.

FIG. 2 is a structural diagram of a computer device, according to an embodiment of the present disclosure.

FIG. 3 is a flowchart diagram of a neural network processing method, according to an embodiment of the present disclosure.

FIG. 4 is a calculation graph of a neural network convolutional operator, according to an embodiment of the present disclosure.

FIG. 5A is a schematic diagram of splitting according to a N dimension of input data.

FIG. 5B is a schematic diagram of splitting according to a C dimension of output data.

FIG. 5C is a schematic diagram of splitting according to a C dimension of input data.

FIG. 5D is a schematic diagram of splitting according to a H dimension of input data.

FIG. 5E is a schematic diagram of splitting according to a W dimension of input data.

FIG. 5F is a structural diagram of a neural network model for face recognition, according to an embodiment of the present disclosure.

FIG. 5G is a structural diagram of a neural network model for license plate character recognition, according to an embodiment of the present disclosure.

FIG. 5H is an abstract diagram of a neural network model, according to an embodiments of the present disclosure.

FIG. 6A is an abstract diagram of a serial neural network model, according to an embodiment of the present disclosure.

FIG. 6B is a schematic diagram of adjusting a splitting method of tensor data through a glue operator, according to an embodiment of the present disclosure.

FIG. 6C is a schematic diagram of semantics of a concat operator, according to an embodiment of the present disclosure.

FIG. 6D is a schematic diagram of semantics of a split operator, according to an embodiment of the present disclosure.

FIG. 6E is an abstract diagram of a neural network model after a glue operator is inserted, according to an embodiment of the present disclosure.

FIG. 6F is another abstract diagram of a neural network model after a glue operator is inserted, according to an embodiment of the present disclosure.

FIG. 7 is a structural diagram of a neural network processing apparatus, according to an embodiment of the present disclosure.

## DETAILED DESCRIPTION OF THE EMBODIMENTS

Technical solutions in embodiments of the present disclosure will be described hereinafter with reference to drawings.

It should be understood that terms "including" and "comprising" used in the specification and the claims indicate the presence of a feature, an entity, a step, an operation, an element, and/or a component, but do not exclude the existence or addition of one or more other features, entities, steps, operations, elements, components, and/or collections thereof.

It should also be understood that the terms used in the specification of the present disclosure are merely intended to describe specific embodiments rather than to limit the present disclosure. As being used in the specification and the claims of the disclosure, unless the context clearly indicates otherwise, singular forms "a", "an", and "the" are intended to include plural forms. It should also be understood that a term "and/or" used in the specification and the claims refers to any and all possible combinations of one or more of relevant listed items and includes these combinations.

As being used in this specification and the claims, a term "if' may be interpreted as "when", or "once" or "in response to a determination" or "in response to a case where something is detected" depending on the context. Similarly, depending on the context, a clause "if it is determined that" or "if [a described condition or event] is detected" may be interpreted as "once it is determined that", or "in response to a determination", or "once [a described condition or event] is detected", or "in response to a case where [a described condition or event] is detected".

In order to better understand the technical solutions of the present disclosure, technical terms involved in the embodiments of the present disclosure are explained first hereinafter.

(1) Data parallelism

Specifically, data parallelism refers to dividing data into several blocks to be mapped to different processors, where each processor executes a same processing program to process data distributed. In the prior art, most of parallel processing adopt this processing method, especially for a problem with high calculation complexity, such as a hydromechanics calculation, image processing, and the like.

In the embodiments of the present disclosure, the data parallelism may be applied to large-scale neural network parallel trainings. Specifically, the core of the data parallelism is to use a plurality of processors to train a same neural network model simultaneously. In each iteration of training, each processor may obtain data to be used in this iteration from a dataset, and a round of reasoning and training calculation of an entire network may be completed on each processor, and gradient data obtained in this iteration may be obtained to update the model. After a server for maintaining weights receives gradients of all processors, these gradients may be used to update data of the model. Clearly, since the plurality of processors may execute a training task in parallel, which means that a larger batch of data may be processed in each iteration, time required by a system to complete the training tasks may be reduced. Therefore, the key of the data parallelism lies in a batch size of data to be processed in each iteration; in other words, if the batch size of the data to be processed is larger, the data is divided into more processors for processing in parallel.

(2) Model parallelism

In the embodiments of the present disclosure, model parallelism is another neural network parallel calculation mode in addition to data parallelism. In short, the model parallelism refers to distributing calculation loads to different processors by dividing neural network model parameters.

(3) Multi-core processor

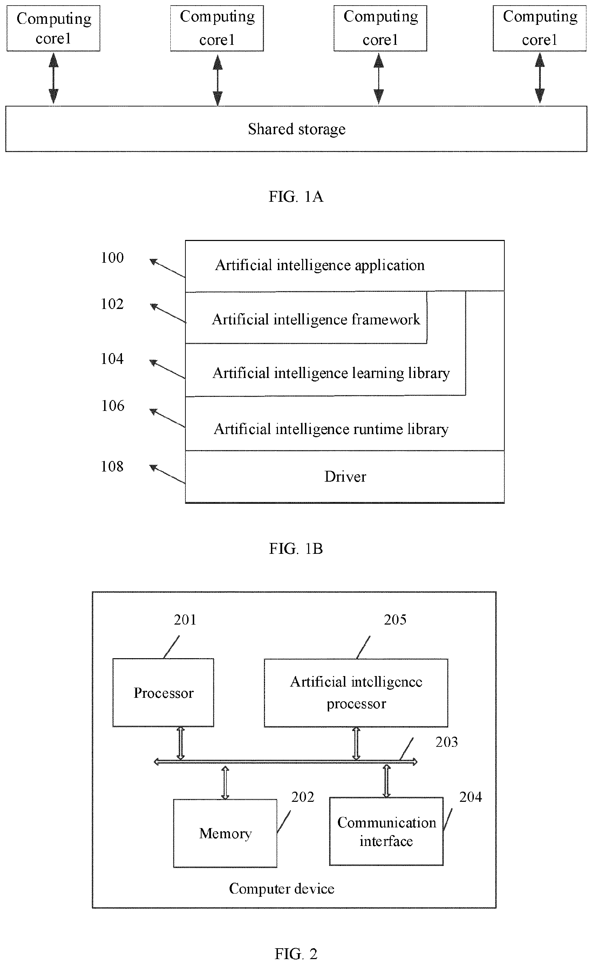

The most common structure currently used in multi-core processors is a multi-core structure based on a shared memory. As shown in FIG.1A, a processor may include a plurality of computing cores, and each computing core may include an independent caching unit, a register file, a computing unit and an instruction control unit, and all computing cores may share a same global memory.

In the prior art, a single core is sufficient for any calculation task with complex logic, but the performance of processors with the single core is limited by Moore's Law and chip technologies. In order to further improve the performance of the processors, the plurality of computing cores may be introduced into the processors. The plurality of computing cores may be used to process those calculation tasks with a high degree of parallelism.

In practical applications, the multi-core structure based on the shared memory is a classical multi-core structure and is very suitable for a neural network training method that adopts data parallelism. Each core may be used as one processor in the data parallelism and may read different pieces of data respectively and then may complete forward and backward calculations of the network model in parallel. Each core may maintain a good performance power ratio under a previous single-core structure in a calculation phrase, and at the same time, throughput of an entire system may also increase with an expansion of core number.

(4) Operator splitting

In the embodiments of the present disclosure, a method of operator splitting may be used to implement a division of calculation tasks; in other words, a single operator may be split into several sub-operators that may be executed in parallel. It is required to be explained that here, both an original operator before the splitting and several sub-operators after the splitting are operators supported by an artificial intelligence processor, and original tensor data is split into several pieces of new sub-tensor data with the operator splitting. Corresponding to a calculation graph, an original calculation graph containing a single operator may be divided into a calculation graph containing more operators that may be executed in parallel. Through this implementation, a task division within operators similar to model parallelism may be realized, and at the same time, it is ensured that each sub-operator after the splitting may reuse instruction implementations of the operators under a single-core structure for calculations, which may avoid reconstruction of the instruction implementations of original operators.

In the embodiments of the present disclosure, not entirely limited to split model parameters, the operator splitting may also adopt a method of data parallelism to split data, which actually blurs a boundary between the model parallelism and the data parallelism. Taking a convolutional operator as an example, if input data and weights of the convolutional operator are used as equivalent low-level tensor data in the calculation graph, for the data parallelism, a division of calculations is based on the splitting of the input data, while for the model parallelism, the division of the calculations is based on the splitting of the weights. Both the two realize the division of the calculation loads by splitting tensor data associated with the convolutional operator. From this perspective, the data parallelism and the model parallelism are unified.

(5) Artificial intelligence processor

An artificial intelligence processor is also called a dedicated processor. In the embodiments of the present disclosure, the artificial intelligence processor refers to a processor specialized in specific applications or domains. For example, a graphics processing unit (GPU), also known as a display core, a vision processor, and a display chip, is a dedicated processor for performing image computations on a personal computer, a workstation, a game console, and some mobile devices (such as a tablet computer, a smart phone, and the like). For another example, a neural-network processing unit (NPU) is a dedicated processor for performing matrix multiplication computations in the field of artificial intelligence applications. The processor adopts a structure of "data-driven parallel calculation" and specializes in processing massive multi-media data of videos and images.

(6) Deep learning framework

Taking a convolutional architecture for fast feature embedding (Caffe) as an example, in practical applications, the Caffe supports a plurality of types of deep learning frameworks, image-oriented classifications and image segmentations, a convolutional neural network (CNN), a region-based convolutional neural network (RCNN), a long short-term memory (LSTM) neural network, and fully-connected neural network design.

In the embodiments of the present disclosure, a Caffe framework may support a plurality of types of basic operators. Specifically, here, the plurality of types of basic operators may include: common neural network operators. For example, the common neural network operators may include: convolutional/deconvolutional operators, pooling operators, activation operators, softmax (classfier) operators, and fully-connected operators, where the activation operators include but are not limited to a ReLU, a Sigmoid, a Tanh, and other operators that may be implemented through interpolation.

In the embodiments of the present disclosure, any operation on any function may be regarded as one operator.

In the embodiments of the present disclosure, functions under the Caffe framework may include: a Caffe Blob function, a Caffe Layer function, and a Caffe Net function, where the Blob function is used to store, exchange and process data and derivative information of forward and backward iterations in the network; the Layer function is used to execute calculations including nonlinear computations such as a convolve computation, a pool computation, an inner product computation, a rectified-linear computation, and a sigmoid computation, and loss calculations such as an element-level data transformation, a normalization calculation, a data loading calculation, a sofmax calculation, and a hinge calculation.

In a specific implementation, each Layer has defined three kinds of important computations, including an initialization setting computation (setup), a forward propagation computation (forward), and a backward propagation computation (backward). The setup is used to reset layers and connections thereof when the model is initialized; the forward is used to receive input data from a bottom layer (bottom) and output the input data to a top layer (top) after calculations; and the backward is used to preset an output gradient for the top layer and calculate an input gradient and pass the input gradient to the bottom layer. For example, the Layer may include a Date Layer, Convolution Layers, a Pooling Layer, an InnerProduct Layer, a ReLU layer, a Sigmoid Layer, a LRN Layer, a Dropout Layer, a SoftmaxWithLoss Layer, a Softmax Layer, and Accuracy Layers. A Net starts from a data layer; in other words, the Net loads data from a disk and ends at a loss layer; in other words, the Net calculates target functions of tasks such as classification and reconstruction. Specifically, the Net is a directed acyclic graph (DAG) composed of a series of layers. The Caffe reserves all intermediate values in the calculation graph to ensure the accuracy of forward and backward iterations.

(7) Software stack for an artificial intelligence processor

Referring to FIG. 1B, a software stack structure 10 may include an artificial intelligence application 100, an artificial intelligence framework 102, an artificial intelligence learning library 104, an artificial intelligence runtime library 106, and a driver 108. The following will explain this in detailed.

The artificial intelligence application 100 may provide artificial intelligence algorithm models corresponding to different application scenarios. The algorithm models may be directly parsed by a programming interface of the artificial intelligence framework 102. In one possible implementation thereof, the artificial intelligence algorithm models may be converted into binary instructions by invoking the artificial intelligence learning library 104, and the binary instructions may be converted into artificial intelligence learning tasks by invoking the artificial intelligence runtime library 106, and the artificial intelligence learning tasks may be placed on a task queue and then may be invoked by the driver 108 to be executed by an underlying artificial intelligence processor. In another possible implementation thereof, the artificial intelligence runtime library 106 may be directly invoked to run off-line operating files that have been previously generated to reduce intermediate overheads of a software structure and improve operating efficiency.

An artificial intelligence framework is a first layer of an entire deep learning ecosystem. Early on, in a Caffe framework, a Layer is regarded as a basic element for constructing a neural network. In later artificial intelligence frameworks, such as TensorFlow and MXNet, although another name, such as an Operator, is adopted, the core idea of the Operator is still similar to that of Layer in the Caffe framework; specifically, neural network calculations may be further divided into various common operators for tensor data, and the artificial intelligence framework may be required to embody deep learning tasks that are expressed by a calculation graph structure that is mapped by the neural network into instructions and data that may be executed on a central processing unit (CPU) or the artificial intelligence processor. In this process, the artificial intelligence framework adopts the operator as a specific element for executing calculation tasks and provides each operator with a kernel function (Kernel) that may be executed on the CPU or the artificial intelligence processor. According to the calculation graph, the artificial intelligence framework may invoke and execute the kernel function corresponding to each operator in the calculation graph and may complete the calculation tasks of the entire neural network.

In order to better understand the present disclosure, research ideas of the technical solutions of the present disclosure will be explained in detail hereinafter.

In the prior art, the problem of the data parallelism is that scalability of the data parallelism depends on a batch size of data to be processed. Although this is usually not a problem in a training phrase, this premise is difficult to be guaranteed in a reasoning phrase. Generally speaking, for a neural network model for real-time services (including video surveillance, autonomous driving, and the like), the data to be processed is usually input serially in the form of stream, resulting in a small data scale or even a single picture for each processing. In this case, the data parallelism does not provide any degree of parallelism, and all work tasks are concentrated on one single core, which makes calculation resources brought by multiple cores may not be translated into the speed of processing tasks.

After the training of the neural network model is completed by using the dataset offline, the model may be deployed in a cloud server to process data from the outside world. At this time, the application scenario may change from an offline training to an online reasoning. In an online reasoning phrase, a very important index is a delay, for example, time that the server receives the data to be processed and then returns processed results, further, time of using the neural network model to process data. A low delay may ensure that a cloud server may respond to the data from a client terminal within the shortest time, and in some more sensitive scenarios, the low delay may directly determine whether a solution may be applied. Therefore, in the online reasoning phrase, a requirement for the artificial intelligence processor may change from processing a large batch of data with high throughput to processing a small batch of data with the low delay.

In this case, traditional data parallelism or model parallelism is difficult to effectively reduce a delay of processing reasoning tasks. For the data parallelism, a large batch of data is a premise, which is inconsistent with a requirement of online reasoning for a small batch of data. For the model parallelism, the model parallelism may usually be a method to solve the problem that a large-scale neural network model exceeds a memory limit of a single device, and distributing the operator to different cores may not reduce the delay of the network. In order to really reduce the delay of processing reasoning tasks on the multi-core artificial intelligence processor, it is necessary to find a method of reasonably distributing a reasoning and calculation task of the small batch of data or even a single piece of data to each core of the multi-core structure to ensure that as many cores as possible participate in the calculation at every time to make full use of resources of the multi-core structure. One method is to split the calculation task of each operator in the neural network into the multiple cores for calculations. This method may ensure that there are multiple cores participating in the calculation at every time even when a reasoning task of a single picture is processed, thereby achieving a purpose of using multi-core resources to reduce the delay.

However, for the multi-core artificial intelligence processor, there are still many problems to be solved. First, a deep learning artificial intelligence processor may customize its own hardware design to adapt data parallel characteristics of a deep learning algorithm itself and to improve calculation throughput, and the artificial intelligence processor often requires a sufficient data scale to achieve high calculation efficiency. However, a further splitting within the operator may reduce a calculation scale of each core. When the splitting reaches a certain degree of granularity, on each core, a loss of calculation efficiency may exceed a benefit brought by increasing the degree of parallelism through the splitting. Therefore, between splitting parallelism and the calculation efficiency, a sufficient degree of parallelism is required to be provided while sufficient calculation efficiency is ensured.

Moreover, the neural network model may be regarded as a complex calculation graph often consisting of hundreds or even thousands of operators. Different kinds of operators have different algorithmic logic, which leads to different methods of splitting these operators. In addition to balancing the calculation efficiency and the degree of parallelism, for the splitting of each operator, a match between an operator in the front and an operator in the back also should be taken into consideration, and even overall impact of the splitting should also be taken into consideration. More and more large-scale complex networks have been brought by the quick development of deep learning. It is not practical to find a good parallel method manually. Therefore, an automated method is required to ensure that good splitting and parallel strategies may be given for different networks.

Additionally, portability to the underlying artificial intelligence processor may also be taken into consideration. For an artificial intelligence processor that lacks enough good programmability, workloads of modifying the software stack brought by the expansion from the single core to the multiple cores and the realization of the splitting parallelism within the operator are extremely heavy. Since traditional implementations of the data parallelism and the model parallelism are still based on an idea that one processing core completes calculation tasks of one operator, there are not a lot of extra workloads. However, cross-core parallelism of a single operator requires modifying the implementation of the operator itself, and difficulty of this modification depends on both programmability of the artificial intelligence processor and complexity of original operator implementation logic. Therefore, how to reduce the extra overheads brought by implementing a low-delay reasoning process on the multi-core structure and reduce dependency of the workloads on the programmability of the artificial intelligence processor itself in the implementation process to make the method be universal to different multi-core artificial intelligence processors in the future may also be taken into consideration.

Based on the above-mentioned analytical description, in the embodiments of the present disclosure, by splitting one operator into a plurality of sub-operators with smaller scales, a calculation library under a single core structure may be directly invoked, thereby avoiding extra workloads brought by reimplementation. For example, an activation operator may obtain many smaller activation operators after the splitting, which means that it is only required to invoke an original single-core activation function on multiple cores to complete each sub-task and it is not required to modify the activation function or re-implement a multi-core version of the activation function. In this process, it is required to consider the calculation efficiency and the degree of parallelism of each operator itself after the splitting, and simultaneously coordination between the operators in the splitting may also be taken into consideration. A final target is to obtain a splitting parallelism solution that may effectively reduce an end-to-end reasoning delay of the entire neural network model.

Additionally, it is required to be explained that according to the neural network processing method of the embodiments of the present disclosure, modifications of the single core processor calculation library may be avoided as much as possible and simultaneously, parallel execution of the neural network model on the multi-core processor may be realized. Specifically, an upper framework may split the operator in the neural network model into several sub-operators that may be executed in parallel, and for each sub-operator, a deep learning framework may invoke the calculation library to generate machine instructions that the sub-operators execute on the single core, and by loading the machine instructions of the sub-operators on different cores, parallel calculations of the operator on the multi-core processor may be realized. Specifically, since the deep learning framework may use a single core processor calculation library to generate calculation instructions of the sub-operators, both input tensor data and output tensor data of the operator in the neural network model may also be split into corresponding sub-tensor data as the operator is split into the sub-operators.

Based on the above-mentioned analysis, a structural diagram of a hardware device to which the method of the present disclosure may be applied will be introduced first. Referring to FIG. 2, FIG. 2 is a structural diagram of a computer device, according to an embodiment of the present disclosure. As shown in FIG. 2, a computer device 20 may include a general-purpose processor 201, a memory 202, a communication bus 203, a communication interface 204, and at least one artificial intelligence processor 205, where the general-purpose processor 201 and the artificial intelligence processor 205 are connected to the memory 202 and the communication interface 204 through the communication bus.

The general-purpose processor 201 may be a central processing unit (CPU), other general-purpose processors, a digital signal processor (DSP), an application specific integrated circuit (ASIC), a field-programmable gate array (FPGA), or other programmable logic components, discrete gate or transistor logic components, discrete hardware components, and the like. The general-purpose processor 201 may be a microprocessor or any conventional processor.

The general-purpose processor 201 may be an integrated circuit chip with signal processing capability. In an implementation process, each step of a neural network processing method of the present disclosure may be completed by instructions in the form of hardware such as an integrated logic circuit or in the form of software in the general-purpose processor 201.

The memory 202 may be a read-only memory (ROM), a random access memory (RAM), or other memories. In the embodiments of the present disclosure, the memory 202 may be configured to store data and various software programs, for example, in the embodiments of the present disclosure, a program of splitting a neural network model according to a determined target splitting path.

Optionally, in the embodiments of the present disclosure, the memory may include a physical apparatus for storing information, where the physical apparatus may generally digitize the information and then storing digitized information through media using electrical, magnetic, or optical methods. The memory of the embodiment may further include: apparatuses for storing the information by using an electrical method, such as the RAM, the ROM, and the like; apparatuses for storing the information by using a magnetic method, such as a hard disk, a floppy disk, a magnetic tape, a magnetic core memory, a magnetic bubble memory, and a USB flash disk; and apparatuses for storing the information by using an optical method, such as a compact disc (CD) or a digital versatile disc (DVD). Of course, the memory may also include memories that use other methods, such as a quantum memory, a graphene memory, and the like.

The communication interface 204 may use, for example, a receiver-transmitter apparatus, such as a transceiver, which is not limited, to achieve communication between the computer device 20 and other devices or communication networks. For example, the communication interface 204 may be used to receive a model file sent by other devices.

The artificial intelligence processor 205 may be mounted on a host CPU as a co-processor, where the host CPU distributes tasks to the artificial intelligence processor 205. In practical applications, the artificial intelligence processor 205 may perform one or more kinds of computations. Taking a NPU as an example, a core part of the NPU is a computation circuit, and the computation circuit is controlled by a controller to extract matrix data in the memory 202 and perform multiplication and addition computations.

Optionally, the artificial intelligence processor 205 may include 8 clusters, and each cluster may include 4 artificial intelligence processor cores.

Optionally, the artificial intelligence processor 205 may be an artificial intelligence processor with a reconfigurable structure. Here, the reconfigurable structure means that if the artificial intelligence processor may use reusablehardwareresources and flexibly change its own structure according to different application requirements to provide a matched structure for each specific application requirement, the artificial intelligence processor may be called as a reconfigurable computing system, and the structure of the artificial intelligence processor is called the reconfigurable structure.

It should be understood that the computer device 20 is merely one example of the embodiments of the present disclosure, and the computer device 20 may have more or fewer components than components shown and may combine two or more components, or may have different implementations of components.

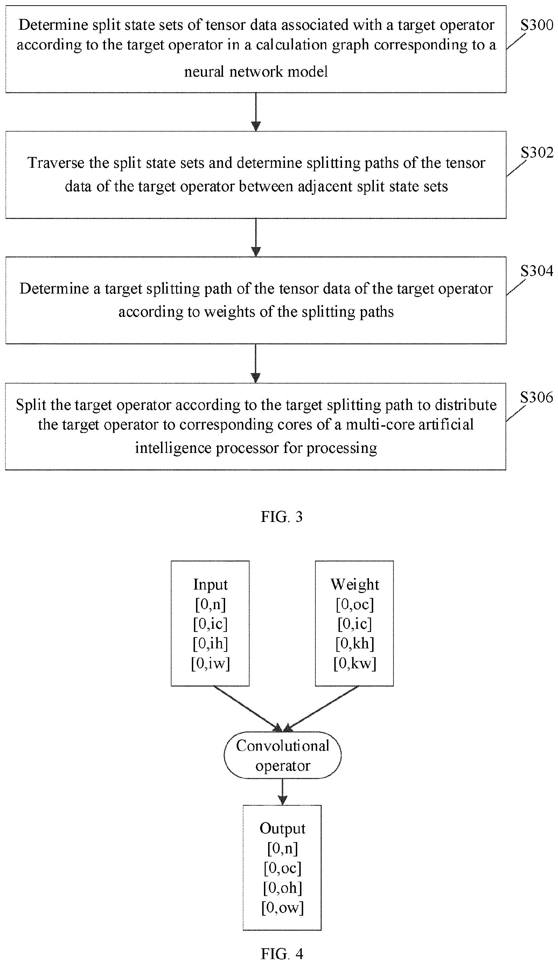

Based on the structural diagram of the computer device shown in FIG.2, with reference to a flowchart diagram of a neural network processing method according to an embodiment of the present disclosure shown in FIG. 3, how to split a target operator to achieve a purpose of optimizing an artificial intelligence processor core computation process in the embodiments of the present disclosure will be described in detailed in the following. Taking a Caffe as an example, the following description includes but is not limited to the following steps.

In a step S300, split state sets of tensor data associated with the target operator may be determined according to the target operator in a neural network model.

Under a Caffe framework, the target operator may be a corresponding target layer in the neural network model, where the target layer is at least one layer in the neural network model, and the tensor data may include input tensor data and output tensor data.

In the embodiments of the present disclosure, the neural network model may receive input data and generate a predicted output according to the received input data and current model parameters. In practical applications, the neural network model may be a regression model, a deep neural network (DNN) model, a convolutional neural network (CNN) model, and a recurrent neural network (RNN) model, which is not limited in the embodiments of the present disclosure.

When the computer device executes a neural network calculation task, if the neural network calculation task has multi-layer computations, input neurons and output neurons of the multi-layer computations do not refer to neurons in an input layer of the entire neural network model and neurons in an output layer of the entire neural network model. For any two adjacent layers in the network, neurons in a lower layer of a network forward computation are the input neurons, and neurons in an upper layer of the network forward computation are the output neurons. Taking a convolutional neural network as an example, if a convolutional neural network model has L layers and a K layer is equal to 1, 2, ..., L-1, for the K layer and a K+1 layer, the K layer may be regarded as the input layer and neurons of the K layer are the input neurons, and the K+1 layer may be regarded as the output layer and neurons of the K+1 layer are the output neurons. In other words, other than a top layer, each layer may be used as the input layer, and a lower layer of that layer may be used as a corresponding output layer.

In the embodiments of the present disclosure, the operator refers to a function of implementing a certain feature. For example, taking a reshape operator as an example, the reshape operator may be used to reinterpret the shape of the tensor data. For another example, taking a transpose operator as an example, the transpose operator may be used to adjust the dimension sequence of the tensor data.

In the embodiments of the present disclosure, a directed acyclic graph refers to adding an acyclic restriction on the basis of a directed graph.

In the embodiments of the present disclosure, a directed edge may be used to represent both a connection relationship between the operators and an execution sequence of the artificial intelligence processor in executing the neural network model.

In the embodiments of the present disclosure, split states in a split state set of the input tensor data of the target operator may be determined according to a computational logic of the target operator and split states in the split state set of corresponding output tensor data.

In the embodiments of the present disclosure, the split states in the split state set of the output tensor data of the target operator may be determined according to the computational logic of the operator and split states in the split state set of corresponding input tensor data.

Specifically, the neural network model may usually be regarded as the directed acyclic graph composed of operators and multi-dimensional tensor data, where the operators and the multi-dimensional tensor data are connected to each other through the directed edge and the direction of the directed edge represents that the data is an input of the operator or an output of the operator. For the ease of explanation, in the embodiments of the present disclosure, an op is used to represent the operator, and a tensor is used to represent the tensor data. Simultaneously, in order to unify expressions of splitting methods of different operators, a deep learning framework uniformly chooses to use splitting methods of the tensor data associated with the operator to illustrate the splitting methods of different operators. In the embodiments of the present disclosure, all tensor data in the neural network is 4-dimensional, and for input data or output data of a final fully-connected layer of an image classification network and input data or output data of a final normalization index regression layer of the image classification network, even if the number of actual dimensions is less than 4, the tensor is still expressed as a 4-dimensional tensor. 4 dimensions are represented by signs including N, C, H, and W respectively, where the N represents a batch size, the C represents a count of feature maps, the H represents a height of feature maps, and the W represents a width of feature maps. This assumption is just for the convenience of explanation. For the framework itself, the framework may support processing of the neural network model including the tensor data with any number of dimensions. Nevertheless, the 4 dimensions are sufficient for most neural network structures.

In the embodiments of the present disclosure, if the computer device splits operators in the neural network model, considering different types of the operators and different computational logic supported by the operators, there are different splitting methods. In order to unify expressions of the splitting methods of different operators, split states of the input tensor data of the operator and split states of the output tensor data of the operator may be used to represent splitting of the computational logic of the operator itself.

In the embodiments of the present disclosure, considering different characteristics of different operators, in order to avoid negative effects brought by unreasonable splitting methods, when the operator is split, the computer device may determine the splitting method of the operator according to the type of the operator and then obtain split states in the split state set of the operator. Specifically, this may refer to Table 1.

Table 1

| Operation | Input dimensions that allow splitting |
|---|---|
| Convolutional operator | N, C, H, W (Both H and W should not be less than a convolutional kernel) |
| Fully-connected operator | N, C |
| Activation operator Relu | N, C, H, W |

(continued)

| Operation | Input dimensions that allow splitting |
|---|---|
| Scale | N, C, H, W |
| BatchNorm layer | N, C, H, W |
| Classifier operator Softmax | Dimensions that do not allow splitting and need to be normalized |
| Pooling operator | N, C, H, W (Both H and W should not be less than a convolutional kernel) |

As shown in Table 1, splitting methods supported by different types of operators are different. Through this implementation, the operators may be split in a targeted manner based on the characteristics of the operators, which may avoid the negative effects brought by the unreasonable splitting methods, for example, an increase in resource consumption of the computer device, a time-consuming problem caused by unbalanced scales of sub-operators after the splitting, and so on.

Specifically, taking the convolutional operator as an example, in the embodiments of the present disclosure, different splitting methods of the convolutional operator may be described as the following five types. These five types may cross each other and exist at the same time to ensure a sufficient degree of splitting:

(1) if the N dimension of the input data of the convolutional operator exceeds 1, the splitting is performed on the N dimension;
(2) the splitting is performed on the C dimension of the input data of the convolutional operator;
(3) the splitting is performed on the C dimension of the output data of the convolutional operator;
(4) the splitting is performed on the H dimension of the input data of the convolutional operator;
(5) the splitting is performed on the W dimension of the input data of the convolutional operator;

It may be known that according to the above-mentioned five splitting methods, an original convolutional operator may be split into smaller convolutions.

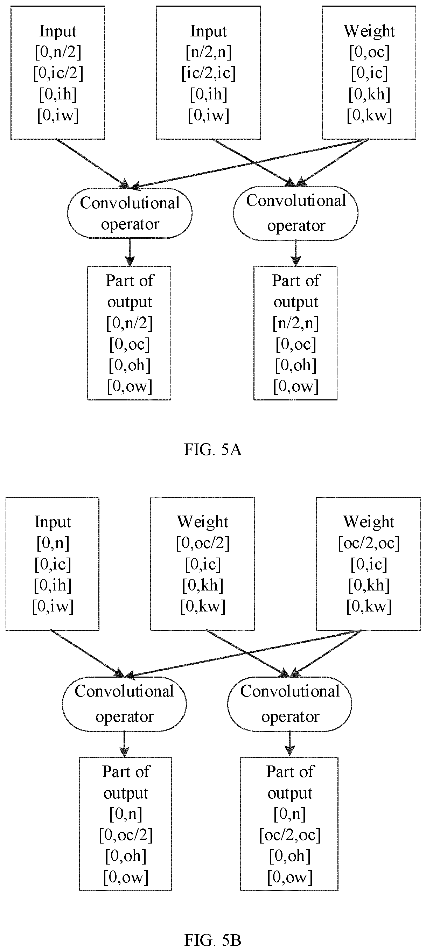

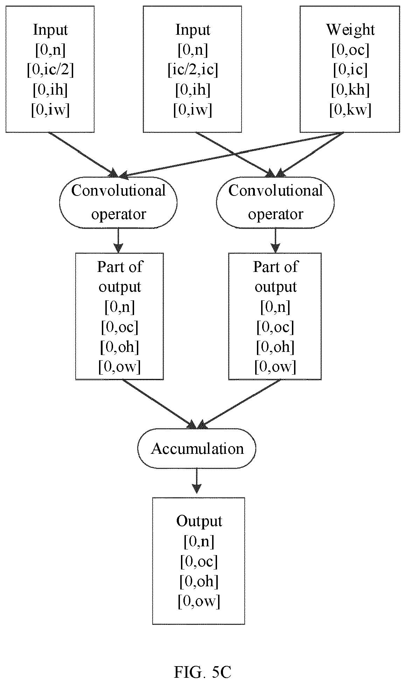

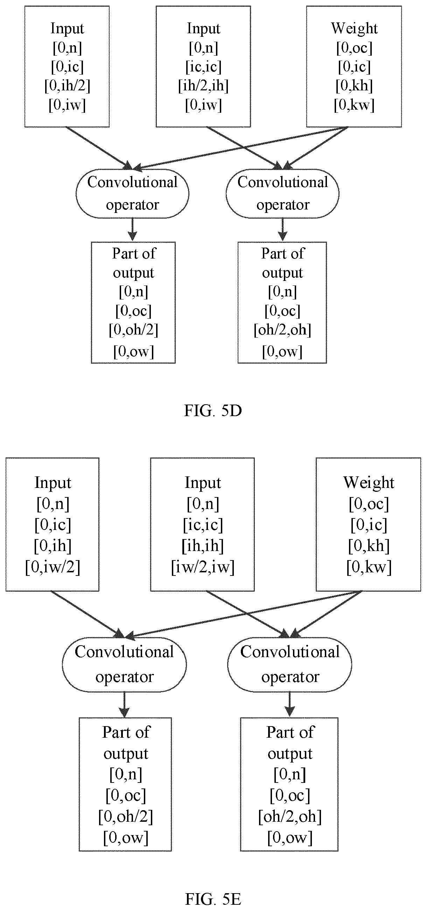

In order to facilitate understanding, the following description will be made in combination with specific examples. Under a Caffe framework, the neural network model has a hierarchical structure. As shown in FIG. 4, FIG. 4 is a schematic diagram of an original calculation graph of a convolutional operator, according to an embodiment of the present disclosure. For a convolutional operator conv, the convolutional operator conv includes input data (input) on 4 dimensions, and under the action of a weight matrix, output data (output) may be obtained. As shown in FIGs. 5A-5E, FIGs. 5A-5E are a plurality of splitting methods of a convolutional operator in a calculation graph in a case that a degree of parallelism is 2, according to an embodiment of the present disclosure. Specifically, FIG. 5A is a schematic diagram of splitting according to a N dimension of input data; FIG. 5B is a schematic diagram of splitting according to a C dimension of output data; FIG. 5C is a schematic diagram of splitting according to a C dimension of input data; FIG. 5D is a schematic diagram of splitting according to a H dimension of input data; and FIG. 5E is a schematic diagram of splitting according to a W dimension of input data. It is required to be noted that in figures, a starting point and an ending point of each dimension of each piece of tensor data are provided, which are used to clarify a relationship between split sub-tensor data and original tensor data. In the figures, n represents a batch size of input tensor data; ic represents a count of input data feature maps; ih represents a length of the input data feature maps; iw represents a width of the input data feature maps; oc represents a count of output data feature maps; oh represents a length of the output data feature maps; ow represents a width of the output data feature maps; kh represents a length of a convolution kernel window; and kw represents a width of the convolution kernel window. In practical applications, these splitting methods may be executed on different dimensions and at the same time may be combined with each other to form more new splitting methods, so as to provide a sufficient degree of parallelism to utilize resources of a multi-core processor and simultaneously avoid an influence of an excessive splitting on a single dimension on the calculation efficiency of the computer device to some extent.

For another example, taking a softmax operator as an example, the computer device may split the softmax operator on any one or more of dimensions other than a dimension for probability normalization of the softmax operator. After the softmax operator is split, several softmax operators that may be executed in parallel may be obtained.

For another example, taking an activation operator as an example, the computer device may allow both input data and output data of the activation operator to be split on any dimension. In practical applications, if the input data of the activation operator is split into several sub-blocks (from the perspective of consistency, the output data of the activation operator may be split in a same manner), which may be expressed as input0, input1, input2, ..., inputm-1 and output0, output1, output2, ..., outputm-1 respectively, in a calculation phrase, the whole activation operator is actually split into m smaller activation operators, and there is no dependency between these activation operators and these activation operators may be executed on multiple cores.

Here, it is required to be noted that for operators that are particularly sensitive to their splitting methods, it is very meaningful to select to split the operators on which dimensions. For example, the above-mentioned Softmax operator.

In the embodiments of the present disclosure, when split state sets of tensor data associated with a target operator are determined, the split state sets may include the following manifestations.

(1) In a possible implementation, a neural network model may include a plurality of different types of operators, and these operators may allow splitting on any dimension, and in this case, the computer device may determine split states in the split state set according to a corresponding splitting method of each operator in the plurality of different types of operators.

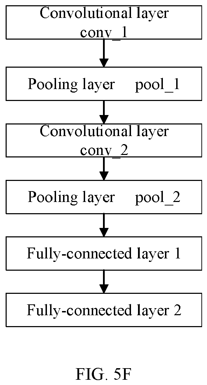

In order to facilitate understanding, the following description will be made in combination with specific examples. Under a Caffe framework, the neural network model has a hierarchical structure. As shown in FIG. 5F, a neural network model for face recognition may include the plurality of different types of operators (such as the convolutional operators, a pooling operator, and a fully-connected operator), where a connection relationship between the operators is: convolutional layer 1-pooling layer1-convolutional layer2-pooling layer2-fully-connected layer 1-fully-connected layer 2. Since these operators may allow splitting on any dimension, then, in this case, the computer device may determine the split states in the split state set according to the corresponding splitting method of each operator.

(2) In a possible implementation, the neural network model may include the plurality of different types of operators, where some operators may allow splitting on any dimension, and some operators may only allow splitting on limited dimensions, then, in this case, the computer device may respectively determine splitting methods corresponding to the plurality of different operators and then determine the splitting methods separately corresponding to the plurality of different types of operators as the split states in the split state set.

(3) In a possible implementation, the neural network model may include the plurality of different types of operators, where some operators may allow splitting on any dimension, and some operators may only allow splitting on limited dimensions, then, in this case, the computer device may respectively determine the splitting methods corresponding to the plurality of different operators and then determine an intersection of splitting methods supported by each operator in the plurality of operators as the split states in the split state set.

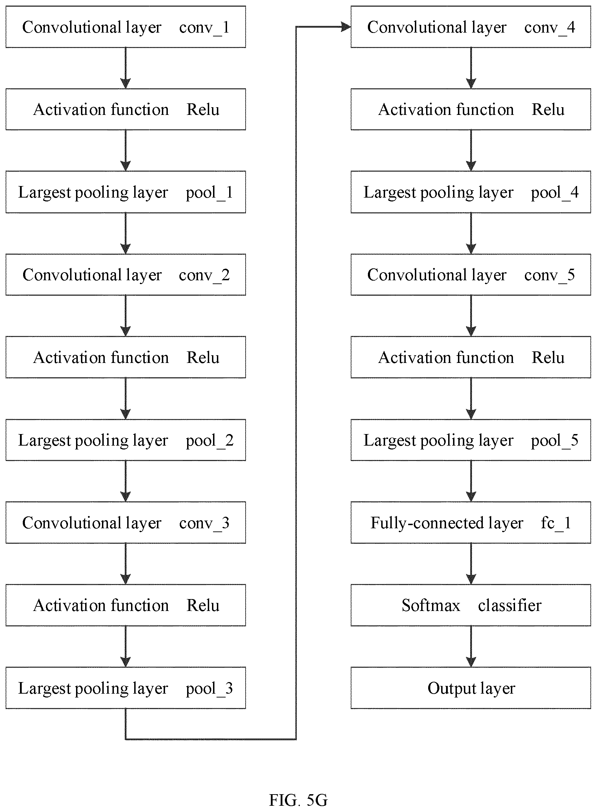

In order to facilitate understanding, the following description will be made in combination with specific examples. Under the Caffe framework, the neural network model has the hierarchical structure. For example, as shown in FIG. 5G, a neural network model for license plate character recognition may include the plurality of different types of operators (such as the convolutional operator, the pooling operator, the activation operator, and the softmax operator), where the connection relationship between the operators is: convolutional layer 1-activation function Relu-the largest pooling layer 1-convolutional layer 2-activation function Relu-the largest pooling layer 2-convolutional layer 3-activation function Relu-the largest pooling layer 3-convolutional layer 4-activation function-the largest pooling layer 4-convolutional layer 5-activation function-the largest pooling layer 5-fully-connected layer 1-softmax layer-output layer. Since the operators such as the convolutional operator, the pooling operator and the activation operator may allow splitting on any dimension but the softmax operator may only allow splitting on limited dimensions, then, in this case, the computer device may determine the intersection of the splitting methods supported by each operator in the plurality of operators as the split states in the split state set.

(4) In a possible implementation, the neural network model may include the plurality of different types of operators, where some operators may not support splitting in any manner. However, in order to keep splitting formats of data consistent, in this case, other operators in the neural network model may not split the neural network model. This state may be regarded as a non-split state. Through this implementation, negative effects brought by an unreasonable splitting method may be avoided. For example, an increase in resource consumption of the computer device, a time-consuming problem caused by an unbalanced scale of sub-operators after the splitting, and so on.

Here, when the states in the split state set are determined, for the technical solutions of the present disclosure, all operators in the neural network model may be split, and part of operators in the neural network model may be split, which is not limited in the embodiments of the present disclosure. Additionally, considering that current network structures and algorithms in the field of deep learning have gradually blurred physical meanings of data dimensions and a boundary between the data dimensions, the present disclosure may be extended to be applied to operator splittings on more dimensions.

In the embodiments of the present disclosure, any type of splitting of the tensor data may be called a split state s of the tensor data. After the computer device splits the tensor data, sub-tensor data set may be obtained. The split state s is characterized by a corresponding sub-tensor data set. All possible split states {s0, s1, s2, ...} constitute a split state set S of the tensor data. Generally speaking, this is an extremely huge state space, which means that a space of possible splitting methods of the operator represented by the split states of the tensor data is also very huge.

In the embodiments of the present disclosure, in a case that at least one set pruning condition is satisfied, the computer device may prune the state space of the tensor data to reduce the state space. For example, pruning conditions include but are not limited to: (1) if the neural network model is split, it should be ensured that scales of sub-operators after the splitting are balanced. Through this implementation, it is possible to remove split states that are unbalanced in terms of splitting from the state space S of the tensor. In the embodiments of the present disclosure, the reason for ensuring that the scales of the sub-operators after the splitting are balanced lies in: firstly, a delay for the multi-core processor to complete a calculation of one operator depends on time of a core that takes the longest time to execute sub-tasks, however, in the multi-core structure, since each core is equivalent in terms of hardware structure, therefore, time consumed by each core depends on task loads that are allocated to the core. If the case that the scales of the sub-operators after the splitting are balanced is satisfied, it may be ensured that the time consumed by each core in the multi-core structure is equivalent, thereby improving execution efficiency of the computer device. (2) If the neural network model is split, it should be ensured that the number of the sub-operators after the splitting is an integer power of 2. Through this implementation, it is possible to remove split states that are unbalanced in terms of splitting number from the state space S of the tensor. In the embodiments of the present disclosure, the reason for ensuring that the number of the sub-operators after the splitting is the integer power of 2 lies in: the core number of the multi-core processor structure is usually the integer power of 2, such as 1, 2, 4, 8, and 16, and the like. In actual applications, because a task whose degree of parallelism is not the integer power of 2 will often generate "fragments" in the core scheduling, and therefore, the number of the sub-operators after the splitting should be the integer power of 2. It may be understood that if the computer device satisfies the above at least one pruning condition, the computer may adjust the split states in the split space S to remove some unreasonable split states, which may reduce a searching space of an operator splitting strategy and simultaneously avoid the negative effects brought by the unreasonable splitting method, for example, the increase in resource consumption of the computer device, the time-consuming problem caused by the unbalanced scales of the sub-operators after the splitting, and so on.

In the embodiments of the present disclosure, not all split states of the tensor data associated with the operator may be selected to represent an effective splitting method of the operator. The splitting dimension of the tensor data should be supported by the operator. For example, input data of a normalization exponent regression operator (Softmax) should not be split in a dimension to be normalized. Additionally, the splitting of both the input tensor and the output tensor of the operator should satisfy a computational logic of the operator. For example, both starting points and ending points of each sub-block split in the H/W dimension of the output data of the convolutional operator should be calculated by sub-blocks split in the H/W dimension of corresponding input data according to a convolutional kernel and a displacement stride of the convolutional operator; the splitting of the input data of the convolutional operator in the C dimension should be exactly the same as the splitting of weight data in the C dimension, and the splitting of the output data in the C dimension should be exactly the same as the splitting of weight data in the N dimension. Under a deep learning framework, an output state may be used to infer an input state of the operator backward according to a specific logic of each operator, or the input state may be used to infer the output state of the operator forward according to the specific logic of each operator. This ensures that split states of related data may always represent the effective splitting method of the operator.

In a step S302, the split state sets may be traversed and the splitting paths of the tensor data of the target operator between adjacent split state sets may be determined.

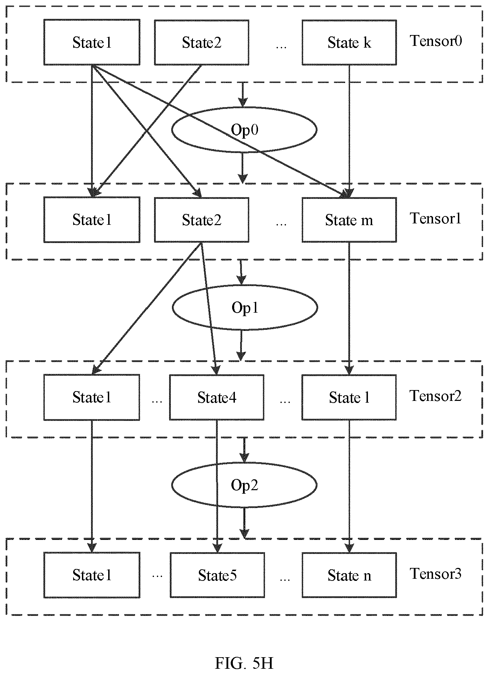

In the embodiments of the present disclosure, as shown in FIG. 5H, a splitting solution P of the entire neural network model may be regarded as a jump from one split state in the split state set of the input tensor data of each operator to one split state in the output tensor. The split state of the output tensor of an operator in the front is the split state of the input tensor of an operator in the back. Each possible jump that passes through the operator corresponds to the effective splitting method of the operator. Therefore, the splitting path may represent the splitting method of the operator.

In the embodiments of the present disclosure, by splitting the computational logic of the operator according to the splitting method corresponding to the splitting path, corresponding sub-operator sets may be obtained. The state of the input tensor data and the corresponding state of the output tensor data may be connected to each other through the splitting path, which means that the sub-tensor data set of one split state of the input tensor data may be processed by the sub-operator in the sub-operator set and the sub-tensor data set of the split state corresponding to the output tensor data may be obtained. Here, the path is used to represent an intermediate process from an input of the operator to an output of the operator.

In the embodiments of the present disclosure, time used by the operator to be executed in parallel on the multi-core processor in a certain split state may be characterized as a weight. Here, it is required to be explained that the time that the multi-core processor takes to complete the calculation of one operator depends on the longest time that the core takes to execute the split sub-calculation tasks.

In the embodiments of the present disclosure, the weight of each splitting path may be determined according to the following steps A1-A4.

In a step A1, calculation loads including $c_1, c_2, ..., c_n$ of n sub-operators after the splitting may be determined, where ci is obtained by calculating according to the type and scale of the i-th sub-operator after the splitting.

In a step A2, the memory access data amount including d1, d2, ..., dn of the n sub-operators may be determined, where di is obtained by calculating according to the type and scale of the i-th sub-operator after the splitting.

In a step A3, a calculation throughput rate $\alpha$ of each artificial intelligence processor core may be determined, where $\alpha$ is determined by performance parameters of the artificial intelligence processor itself.

In a step A4, a memory access bandwidth $\beta$ of each artificial intelligence processor core may be determined. Generally speaking, the multiple cores of the artificial intelligence processor share a limited memory access bandwidth, therefore, $\beta=B/n$, where B is a total bandwidth of the multi-core artificial intelligence processor.

Based on the above-mentioned determined parameters, the computer device may calculate the weight corresponding to each splitting method according to the following formula (1):

$$t = \max_{i=1,...,n}(\max(c_i / \alpha, d_i / \beta)) \tag{1}.$$

In this formula, an operation of taking a maximum value in an inner side in the formula is based on the fact that a calculation part and a memory access part implemented by the operator may hide each other; in other words, the calculation part and the memory access part may be executed in parallel as much as possible. For some artificial intelligence processors, if the scales of the sub-operators are too small, calculation throughput of each core may be reduced. In this case, a further modification may be performed on $\alpha$ to make an evaluation value more accurate. An operation of taking a maximum value in an outside in the formula is based on the fact that the time that the multi-core processor takes to complete the calculation of one operator depends on the longest time that the core takes to execute the sub-calculation tasks.

It is required to be noted that the above-mentioned method of obtaining the weights of the splitting paths is only a partial list of examples, not an exhaustive list. With an understanding of the essence of the technical solutions of the present disclosure, those skilled in the art may make other modifications or variations on the basis of the present disclosure. For example, measuring the weights of the splitting paths may be based on not only the time of executing the sub-tasks, but also the throughput of executing the sub-tasks. Or by actually measuring the time of executing all sub-tasks according to the operator splitting method corresponding to the splitting path on the multi-core processor, the weights of the splitting paths may be determined. However, as long as functions and technical effects realized by the modifications or variations are similar to those of the present disclosure, the modifications or variations shall fall within the scope of protection of the present disclosure.

In a step S304, a target splitting path of the tensor data of the target operator may be determined according to the weights of the splitting paths.

In the embodiments of the present disclosure, when the target splitting path of the tensor data of the target operator is determined, there are two different implementations. In a possible implementation, the target splitting path may be determined through a forward traversal. In another possible implementation, a target optimization path may be determined through a backward traversal. The detailed explanation will be made hereinafter.

In the embodiments of the present disclosure, determining the target optimization path through the forward traversal may include:

traversing all split state sets of the tensor data of the target operator, and for a current split state set, traversing each split state to obtain all directed edges directing to a current split state and splitting paths from split states corresponding to starting points of the directed edges to split states of input tensor data of the target operator;

determining splitting paths from the current split state to the split states of the input tensor data of the target operator according to weights of the directed edges and weights of splitting paths from initial split states corresponding to the directed edges to the split states of the input tensor data of the target operator, where the weights of the splitting paths are determined according to weights of all directed edges corresponding to the splitting paths; and

after all split state sets of the target operator are traversed, obtaining the target splitting path from the split state set of the input tensor data of the target operator to the split state set of the output tensor data of the target operator.

In the embodiments of the present disclosure, determining the target optimization path through the backward traversal may include:

traversing all split state sets of the target operator, and for the current split state set, traversing each split state to obtain all directed edges starting from the current split state and splitting paths from split states corresponding to ending points of the directed edges to the split states of the output tensor data of the target operator;

determining splitting paths from the current split state to the split states of the output tensor data of the target operator according to the weights of the directed edges and the weights of splitting paths from split states corresponding to ending points of the directed edges to the split states of the output tensor data of the target operator, where the weights of the splitting paths are determined according to the weights of all the directed edges corresponding to the splitting paths; and

after all split state sets of the target operator are traversed, obtaining the target splitting path from the split state set of the input tensor data of the target operator to the split state set of the output tensor data of the target operator.

In the embodiments of the present disclosure, after the computer device determines weights separately corresponding to a plurality of different splitting solutions, the computer device may determine a splitting solution with the smallest weight as the target splitting path of the neural network model.

In the embodiments of the present disclosure, the number of target splitting paths obtained by computer device through the forward traversal (or the backward traversal) may be 1 or multiple, which is not limited in the present disclosure. Those skilled in the art should understand that determining the number of the target splitting paths is often required to be combined with a specific neural network model (or a specific target operator). Here, it is required to be further explained that if the number of target optimization paths is multiple, in the embodiments of the present disclosure, any one of a plurality of target optimization paths may be used to split the neural network model, or an optimal target optimization path may be selected from the plurality of target optimization paths to split the neural network model, so that the multi-core processor may run the split neural network model on a corresponding core.

In the embodiments of the present disclosure, in combination with a Viterbi algorithm, the computer device may obtain the target optimization path from FIG. 5H. Here, the target optimization path is a path with the smallest weight sum. Specifically, the Viterbi algorithm is a dynamic programming algorithm used to find an implicit state sequence that is most likely to generate an observation time sequence. In the embodiments of the present disclosure, the states in the split state set of the tensor data may be regarded as implicit states in the Viterbi algorithm, and the directed edges between the split state sets may be regarded as transition relationships between the implicit states, and the weights of the directed edges correspond to logarithmic values of a transition probability between the implicit states.

In a specific implementation, the computer device may traverse all operators in the network calculation graph from front to back. When accessing the i-th operator, the computer device may determine the shortest path {$l_{st}$ $0_{lst}$ $1,...,l_{st\,p-1}$} from the split states in the split state set of the input tensor data in the neural network model to each split state in the split state set $\{s_i^0, s_i^1,..., s_i^{p-1}\}$ of the output tensor data of the current operator according to all directed edges and weights $w_{s_i^u \to s_{i+1}^v}$ corresponding to the current operator (specifically, as shown in formula (5)), where

$$l_{s_{i+1}^v} = \min_{u=0,...,p-1}(l_{s_i^u} + w_{s_i^u \to s_{i+1}^v})$$.

After the computer device completes a traversal of all operators, the shortest paths from the split states in the split state set of the input tensor data of the neural network to each split state in the split state set of the output tensor data may be obtained, and then from these shortest paths, the computer device may determine the shortest path in a global scope, which is the target optimization path.

Here, it is required to be explained that the above-exemplified implementation of using the viterbi algorithm to obtain the target optimization path is just an example, not an exhaustive list. With an understanding of the essence of the technical solutions of the present disclosure, those skilled in the art may make other modifications or variations on the basis of the present disclosure. For example, the weight of each splitting path from the split state set of the input tensor data of the neural network model to the split state set of the output tensor data of the neural network model may be determined according to the weight sum of the corresponding state path. A threshold may be set according to experience. If the weight of the splitting path is less than a set threshold, the splitting path may be used as the target splitting path to split the neural network model. However, as long as functions and technical effects realized by the modifications or variations are similar to those of the present disclosure, the modifications or variations shall fall within the scope of protection of the present disclosure.

In order to facilitate understanding, the following description may be combined with specific examples to explain how to obtain the target splitting path after all split state sets of the target operator are traversed in the embodiment of the present disclosure.

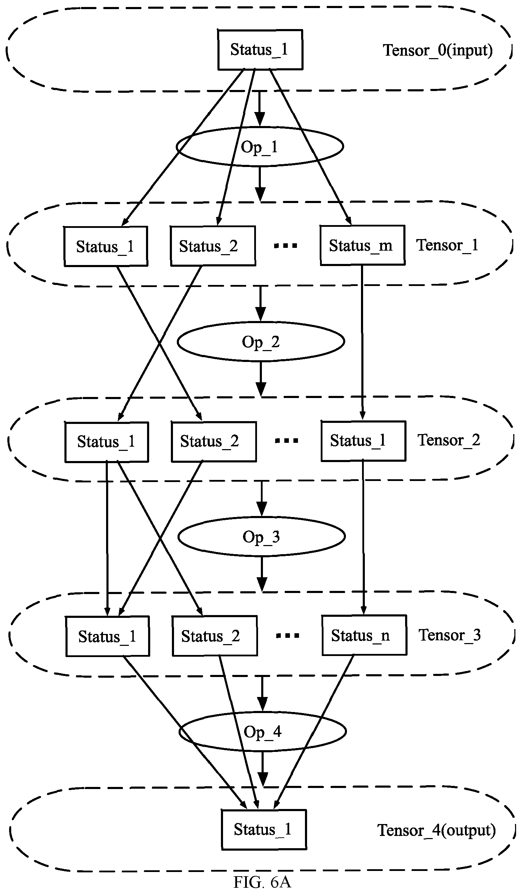

As shown in FIG. 6A, a neural network model is a series structure, and both input tensor data and output tensor data of an entire neural network model are non-split states. Here, a case that the input tensor data of the entire neural network model is the non-split states means that: there is only one input state in a current split state set. Then, accordingly, a case that the output tensor data of the entire neural network model is the non-split states means that: there is only one output state in the current split state set.

A series neural network model including n operators may be described as an operator sequence (including OP0, OP1, OP2, ..., OPn). Assuming that each operator only has one input and one output, and an input of the operator in the front is an output of the operator in the back, then, all tensor data, including the input tensor data and the output tensor data of the entire neural network and all intermediate result tensors between the operators, constitutes a set (including Tensor0, Tensor1, ..., Tensorn), where the input of an OPi is a Tensori-1, and the output of the OPi is a Tensori. For each data tensor Tensori, there is a corresponding state set Si. The target of a searching strategy is to find a mapping relationship Tensor$_i$ → S$^i$ between a tensor itself and a certain state in the state set of the tensor. By determining a specific split state for each tensor data in the neural network model, splitting methods of all operators may be determined. Therefore, the mapping relationship between all tensor data in the neural network model and split states of all tensor data may be called a splitting solution P of the network model. In a calculation phrase, an i-th operator OPi may calculate output tensor data in a split state r according to input data in a split state S, and a specific parallel calculation method is determined by states of both the input tensor data and the output tensor data. Simultaneously, the calculation time of the operator is denoted as $t_{s \to r}$, and the value of the calculation time depends on a corresponding splitting method and hardware characteristics of a underlying accelerator, and a calculation formula for a delay T of the entire network is:

$$T = \sum_{i=1}^{n} t_{s^{i-1} \to s^i}$$

$$(2).$$

In this formula, $s^{i-1} \in S^{i-1}$, $s^i \in S^i$ .

Since the splitting solution P of the entire network may be regarded as a jump from the state in the split state set of the input tensor of each operator to the state in the output tensor. Here, each possible jump through the operator corresponds to an effective splitting method of the operator and time ti applied when the operator is executed in parallel on a multi-core processor by using this splitting method. Therefore, the ti may be regarded as a weight of a directed edge directing from the state of the input tensor of the operator to the state of the output tensor. Simultaneously, for the input tensor and the output tensor of the entire network, there is only one non-split state that keeps an entire data block continuous and complete in each corresponding state space, which allows the splitting solution P of the neural network model to start from complete input data and end at complete output data and enables external users to always see a complete input and a complete output. At this time, searching a good splitting solution P for a given neural network model is to find the shortest path from a non-split state of the input tensor data to a non-split stat of the output tensor data. This path must select one state to pass through in effective state spaces of each intermediate result tensor.

Here, both a formula 3 and a formula 4 provide abstract presentations.

$$P = \{s^0, s^1, ..., s^n\} = \arg\min(T(s^0, s^1, ..., s^n))$$

$$(3).$$

$$T(s^0, s^1, ..., s^n) = \sum_{i=1}^{n} t_{s^{i-1} \to s^i}$$

$$(4).$$

Specifically, the computer device sets the non-split state of the input tensor data of the entire neural network model as an initial state Sroot. In an initial phrase, the non-split state of the input tensor data of the neural network model is the initial state Sroot, and a weight of a splitting path corresponding to the initial state Sroot of is 0, and weights of splitting paths corresponding to all states of all other tensor data are ∞ . Any one state s of any one piece of tensor data in the neural network model has a corresponding splitting path from the Sroot to the s, whose weight is ls. Each split state set may be accessed from front to back, and in each split state set, each state s thereof may be traversed in turn. For each state s, there are directed edges directing to several split states in the split state set in the back, which are e1, ..., eks. Taking a split state v in the split state set in the back as an example, a weight tsv between the state s and the state v may be obtained by using the formula (1), and a weight lv of a splitting path from the Sroot to the state v corresponding to the state v in a next split state set pointed to by the state path may be updated by using the formula (5).

$$l_v = \min(l_v, l_s + t_{sv})$$

$$(5).$$

After the computer device completes an access to all split state sets through a forward traversal based on the directed edges of the neural network model, a target splitting path from the non-split state Sroot of the input tensor data of the entire neural network model to a non-split state Send of the output tensor data of the neural network model may be obtained.

The above describes a path from the the non-split state Sroot to the non-split state Send through one state in each split state set. This path is the splitting path of the neural network model. The computer device may select the splitting path with the smallest weight from the splitting paths of the neural network model as the target splitting path of the neural network model.

It is required to be explained that the neural network model shown in FIG. 6A is the series neural network model, and for the ease of explanation, the split state sets corresponding to both the input tensor data and the output tensor data of the neural network model are the non-split states. If the split state set of the output tensor data of the neural network model is not the non-split state Send, but a set composed of a plurality of split states, the splitting path with the smallest weight from the splitting paths of each split state of the split state set of the output tensor data of the neural network model may be selected as the target splitting path from the split state set of the input tensor data of the entire neural network model to the split state set of the output tensor data of the neural network model.

Additionally, it is required to be explained that the computer device may search the splitting path from the non-split state Send to the non-split state Sroot. Two splitting paths are equivalent. Similarly, if the split state set of the input tensor data of the neural network model is not the non-split state Send, but the set composed of the plurality of split states, the splitting path with the smallest weight from the splitting paths of each split state of the split state set of the input tensor data of the neural network model may be selected as the target splitting path from the split state set of the input tensor data of the entire neural network model to the split state set of the output tensor data of the neural network model.

In a step S306, the target operator may be split according to the target splitting path to distribute the target operator to corresponding cores of the multi-core processor for processing.

In the embodiments of the present disclosure, the core number of a multi-core artificial intelligence processor may be 8 or 16, which is not limited in the present disclosure.

In the embodiments of the present disclosure, after a target optimization path is determined, the computer device may split the target operator according to a determined target optimization path. Considering that the neural network model may be used to execute a specific neural network calculation task, such as face recognition, edge detection, and semantic analysis, and the like, if the computer device splits the neural network according to the target splitting path, which means that the neural network calculation task may be split into several sub-calculation tasks, in this case, the computer device may run the several sub-calculation tasks that are split by invoking the multi-core artificial intelligence processor, so as to obtain an operation result. Here, the operation result refers to a result when the computer device executes the specific neural network calculation task. The operation result includes but is not limited to: precision of the neural network model, and runtime of the neural network model, and the like. In practical applications, the computer device may output the operation result. For example, the computer device may display the operation result on the display.

By implementing the embodiments of the present disclosure, the computer device may split the neural network calculation task into several sub-calculation tasks with smaller scales, and in this situation, the multi-core processor may directly invoke a calculation library under a single-core structure, which may make full use of hardware resources of the multi-core processor and further avoid extra workloads brought by reimplementation.

In the embodiments of the present disclosure, a glue operator may be inserted between the target operator and split states associated with the target operator to adjust the split states in the split state set. The following specifically describes how to introduce the glue operator and determine the target optimization path based on an updated split state set in the embodiments of the present disclosure, which includes but is not limited to the following steps.

In a step S400, split state sets of tensor data associated with the operator of the target operator may be determined according to the target operator in the neural network model.

In the embodiments of the present disclosure, for a specific implementation of the step S400, reference may be made to the aforementioned step S300, which will not be repeated here.

In a step S402, the glue operator may be inserted between the target operator and the split state set associated with the target operator, and the split states in the split state set may be adjusted, and an adjusted split state set may be obtained, where the glue operator is used to convert the split states obtained by splitting the tensor data according to one splitting method into the split states obtained by splitting the tensor data according to another splitting method.

In the embodiments of the present disclosure, in order to facilitate a distinction between the split state set before introducing the glue operator and the adjusted split state set after the glue operator is introduced, the split state set before introducing the glue operator may be defined as a first split state set, and the adjusted split state set after the glue operator is introduced may be defined as a second split state set.

In the embodiments of the present disclosure, if a single operator is split, based on different splitting methods, the tensor data associated with the operator may also be split into several pieces of sub-tensor data according to different methods. Since in an actual network, the tensor data often have a connection relationship with a plurality of operators, it is not an isolated problem to select the splitting method for each operator in each calculation graph, and the selection of the splitting method may have an impact on neighboring operators and even all operators in the network. For example, in the simplest case, a piece of tensor data Tensor1 may be both the output data of an operator OP0 and the output data of an operator OP1. If the operator OP0 is determined to be split in a certain way, as the output of the operator OP0, the Tensor1 is also determined to be split into a series of pieces of sub-tensor data in a certain way. Therefore, when the operator OP1 selects the splitting method, it must be ensured that a selected method is compatible with a determined splitting method of the input tensor data Tensor1, which constrains a selection range of the operator OP1. Then, it may be understood that the splitting method selected by the operator OP1 under this constraint may constrain the splitting selection of other adjacent operators through the tensor data associated with the operator.

The mutual influence between the operators on the choice of the splitting methods may bring about many problems. First of all, the mutual influence will bring about a performance problem. In practical applications, if the computer device invokes sub-calculation tasks corresponding to different splitting methods on the multi-core processor, there may be a difference in performance. Then, it may be understood that if an optimal splitting solution of two adjacent operators is inconsistent with splitting methods of tensor data commonly associated with the two adjacent operators, in order to avoid a conflict, one party must succumb to the selection of the other.

Moreover, the mutual influence of the splitting methods between the operators may affect the executability of the entire network. As mentioned earlier, the splitting method that different operators may support depends on the type of the operator itself and the size of the data. For some operators, such as an activation operator ReLu and a convolutional operator Conv, the supported splitting method allows their input data to be split on any dimension in a NCHW(which includes a N dimension, a C dimension, a H dimension, and a W dimension); for some operators, such as Softmax operators, the supported splitting method only allows their input data to be split on certain specific dimensions; and finally, for some operators that are often extremely complex in implementations, such as non-maximum suppression (NMS) operators, it is hard to distribute the calculation loads to multiple cores to be executed in parallel through splitting operators. Therefore, such operators may be executed only on a single core ultimately and their corresponding input data may remain intact without splitting. Then, it may be understood that if the last type of operators mentioned above exists in the neural network model, it must be ensured that the input data of the operators remains intact without splitting, otherwise, the network may not continue to be executed at the operators. If this constrain spreads with the network structure, it may make it difficult to mine a sufficient degree of parallelism in neural network calculations through splitting the operators.

In the embodiments of the present disclosure, in order to solve the problem that operator splittings influence each other, the glue operator may be inserted between the target operator and the first split state set associated with the target operator.With the glue operator, each operator in the calculation graph corresponding to the neural network model may select the splitting method that acts on itself flexibly and unrestrictedly.

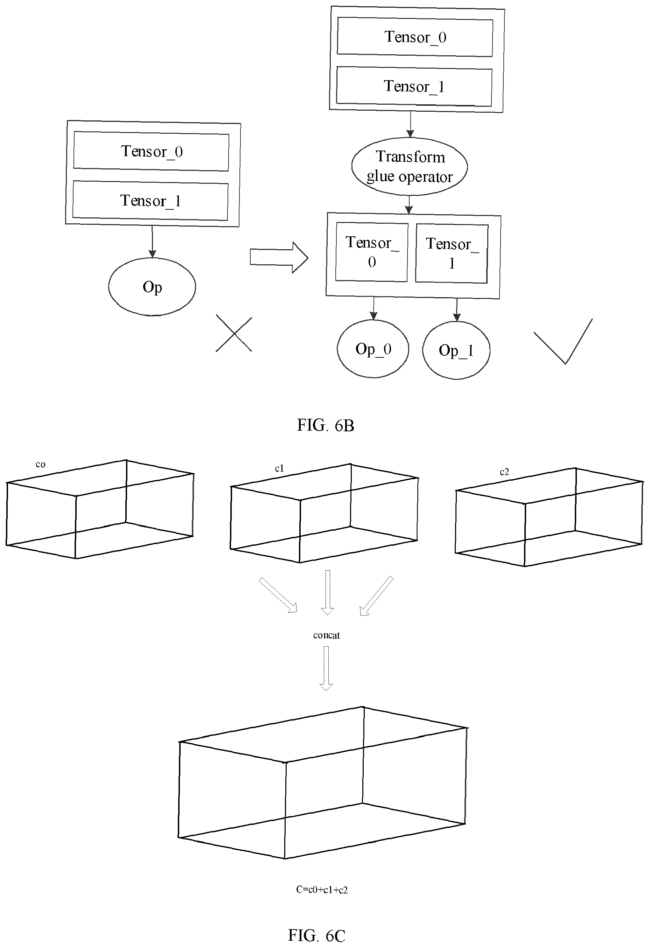

Specifically, the glue operator (Transform) may be used to adjust the states of the several pieces of sub-tensor data obtained by splitting the tensor data according to one splitting method to the several pieces of sub-tensor data obtained by splitting the tensor data according to another splitting method. As shown in FIG. 6B, if a splitting method of current tensor data is not allowed by any splitting method of a subsequent operator, or if the subsequent operator is compatible with the splitting method of the current tensor data, performance improvement brought by the splitting method that is optional is very poor, in this situation, the computer device may insert a glue operator in a calculation graph to adjust the splitting method of current data to another better splitting method.

In the embodiments of the present disclosure, semantics of the glue operator may be obtained through a concat operator and/or a split operator in the neural network model. The detailed explanation will be made hereinafter.

In the embodiments of the present disclosure, the concat operator, which is also called a concatenation operator, is used to concatenate a plurality of pieces of tensor data into one tensor along a specified dimension. In addition to the specified dimension, other dimensions of input tensor should also be consistent. Through the concat operator, the neural network may concatenate a plurality of tensors representing features of different upstream locations into one tensor, so that these features may be processed together in downstream calculations. Specifically, the detail may be provided with reference to a schematic diagram of semantics of a concat operator shown in FIG. 6C.

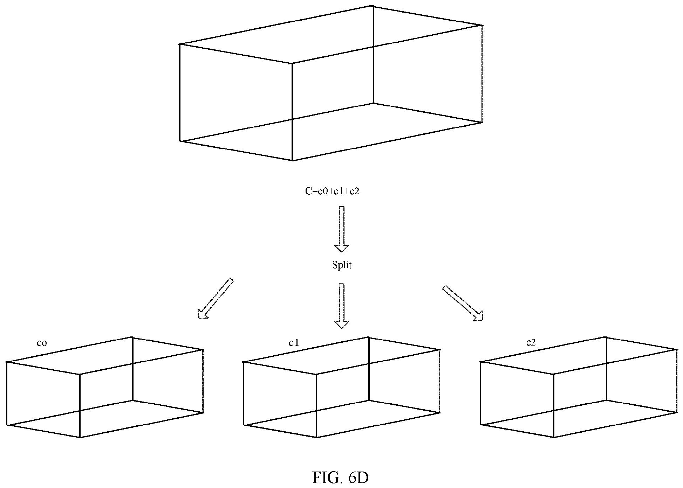

In the embodiments of the present disclosure, a split operator, which is also called a splitting operator, is used to split one tensor into a plurality of tensors on a specified dimension. In addition to the specified dimension, the plurality of tensors after splitting may be consistent on other dimensions. Through the split operator, features belonging to the same tensor data may be split into a plurality of copies to be targeted to be processed separately in subsequent calculations. Specifically, the detail may be provided with reference to a schematic diagram of semantics of a split operator shown in FIG. 6D.

In the embodiments of the present disclosure, a glue operator may use one of four implementation methods, which are splitting-concatenation, concatenation-splitting, concatenation, and splitting. In a concatenation phrase, adjacent sub-data blocks on any dimension may be concatenated into one piece of new sub-tensor data, and in a splitting phrase, any one piece of sub-tensor data may be split into several pieces of smaller sub-tensor data. In this way, the sub-tensor data obtained by splitting the tensor data according to any one splitting method may be converted into the sub-tensor data obtained by splitting the tensor data according to another one splitting method. To illustrate this, assuming that data is one-dimensional, and a splitting form before adjusting is expressed as {(0, p1), (p1, p2), ..., (pn-1,end)}, where each segment represents a sub-segment of the one-dimensional data after splitting, and a splitting form after adjusting by the glue operator is expressed as {(0, q1), (q1, q2), ..., (qm-1,end)}, and if two adjacent segments before adjusting which are (pi-1, pi) and (pi, pi+1) are one segment after adjusting, which is (qj, qj+1), which means that pi-1 is equal to qj and pi+1 is equal to qj+1, when adjusting this part, it is only required to concatenate the (pi-1, pi) and the (pi, pi+1) together in the concatenation phrase and the splitting phrase may be skipped. Similarly, in another case, if one segment before adjusting is a collection of several segments after adjusting, then the concatenation phrase may be skipped and a corresponding splitting may be executed in the splitting phrase. In the worst case, all data may be concatenated into one piece of complete one-dimensional data in the concatenation phrase and the corresponding splitting may be executed in the splitting phrase.

In the embodiments of the present disclosure, inserting the glue operator between a target operator and a first split state set associated with the target operator, and adjusting split states in a split state set of input tensor data of the operator, and obtaining a second split state set may include:

inserting the glue operator between the target operator and the first split state set associated with the target operator, and through the glue operator, updating split states in the first split state set to the second split state set.

As mentioned earlier, all sub-tensor data obtained by splitting the data according to any one splitting method may be called a split state S of the tensor data, and all possible states of the tensor data constitute a state space S of the tensor data. Assuming that there is an operator OP in the network that splits according to a certain splitting method, its input data Tensor0 may have a state s and its output data Tensor1 may have a state t, where the state s belongs to the state space S of the Tensor0 and the state t belongs to a state space T of the Tensor1. Based on this, the splitting method of the operator OP itself may be considered a directed edge from s to t.

In the embodiments of the present disclosure, based on an abstract description of the state of the tensor data, an entire neural network may be abstracted as shown in FIG. 5H. In the figure, a dashed box represents the split state set of each piece of tensor data. The split state set of each piece of tensor data may include several split states, and these split states come from the split state space of the tensor data. The directed edge between the state in the split state set of the input tensor data of the operator and the state in the split state set of the output tensor represents the splitting method of the operator itself, and parallel time in this splitting method may be used as a weight of the directed edge. The Tensor0 is the input tensor data of the entire neural network, and a Tensor3 is the output tensor data of the entire neural network. Any one path that starts from any state in the state set of the Tensor0 and ends at any state in the state set of theTensor3 corresponds to an effective splitting solution of the neural network, which may be denoted as, for example, a P.

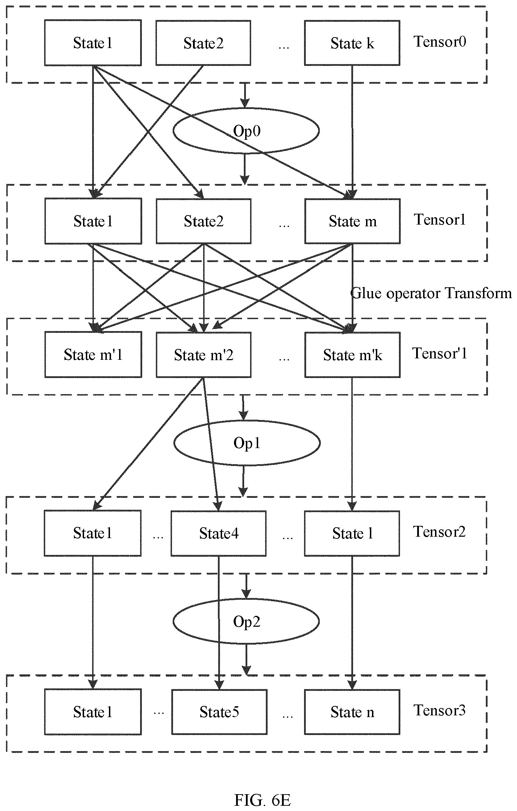

In the embodiments of the present disclosure, taking the split state set of the Tensor1 shown in FIG. 5H as an example, by inserting the glue operator in the split state set associated with the operator OP0, and through the glue operator, by adjusting the states in the split state set, an updated split state set may be obtained. Specifically, this may be shown in FIG. 6E. In FIG. 6E, split states in an updated split state set may include: a state m'1, a state m'2, and a state m'k. Here, the state m'1, the state m'2, and the state m'k are new states generated after states in a first split state set pass through glue operator.

In the embodiments of the present disclosure, inserting the glue operator between a target operator and the first split state set associated with the target operator, and adjusting split states in a split state set of input tensor data of the operator, and obtaining a second split state set may include: inserting the glue operator between the target operator and the first split state set associated with the target operator, and through the glue operator, updating the states in the first split state set to a third split state set; and generating the second split state set according to the first split state set and the third split state set.

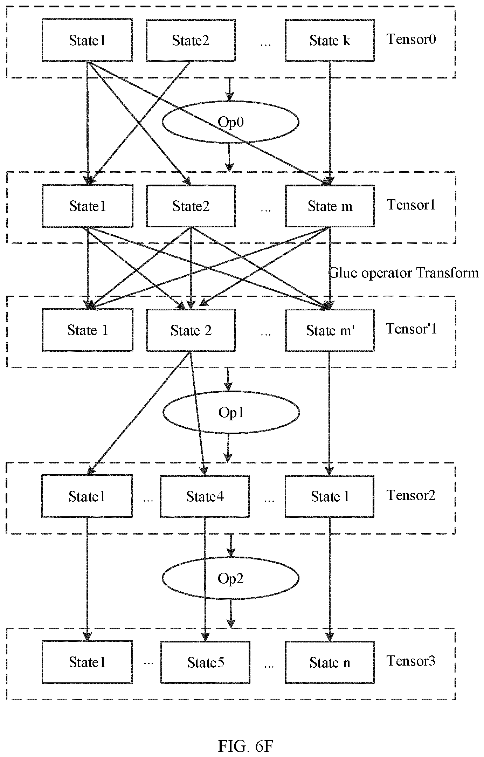

In the embodiments of the present disclosure, taking the split state set of the Tensor1 (in other words, it is the first split state set) shown in FIG. 5H as an example, the glue operator may be inserted in the split state set associated with the operator OP0, and through the glue operator, the split states in the split state set may be adjusted and the split states in the first split state set may be updated to the third split state set. Then, according to the first split state set and the third split state set, the second split state set may be generated. Specifically, this may be shown in FIG. 6F. In FIG. 6F, split states in a second split state set may include: a state 1, a state 2, ..., and a state m'. Here, the state 1, the state 2, ..., and the state m are split states in a first split state set, and the state m' is a new split state generated after states in the first split state set pass through glue operator. Through this implementation, it may be ensured that the second split state set contains as many different split states as possible, which is conducive to obtaining a target optimization path of an entire neural network model.

In the embodiments of the present disclosure, the glue operator may be used to represent the behavior of adjusting split states of tensor data. The calculation scale of each layer of the neural network model keeps changing with the extension of the network. As the splitting trend of the neural network model changes, it is required to adjust the splitting method of the operator accordingly. In other words, it is required to adjust states of intermediate results. As shown in FIG. 6E, inserting the glue operator between the operator Op0 and the Tensor1 input may convert any one split state of the tensor data into another split state. For the glue operator, the input tensor data and the output tensor data have a same shape and a same state space. For any one split state of the input tensor data, there is a directed edge directing to all split states of the output tensor data. Therefore, there forms a fully-connected grid structure between the split state set of the input tensor data and the split state set of the output tensor data, which enables any one split state of the input tensor data to be converted into another split state before the operator Op0. Based on this, the possibility of adjusting the split state of the input tensor data before the calculation of each operator, which means the possibility of adjusting the splitting method of the operator itself before the calculation of each operator, is introduced into the searching space of the splitting solution.

It is required to be noted that FIG. 6E or FIG. 6F illustrates that the glue operator may be inserted between the operator and the corresponding input tensor data, and the glue operator may be inserted between the operator and the corresponding output tensor data, and even the glue operator may be inserted both between the operator and the corresponding input tensor data and between the operator and the corresponding output tensor data. The above is only an incomplete, not exhaustive, list of examples. With an understanding of the essence of the technical solutions of the present disclosure, those of ordinary skill in the art may make modifications or variations based on the present disclosure. However, as long as functions and technical effects realized by the modifications or variations are similar to those of the present disclosure, the modifications or variations shall fall within the scope of protection of the present disclosure.

In a step S404, the adjusted split state set may be traversed, and the splitting paths of the tensor data of the target operator between adjacent split state sets may be determined.

As mentioned earlier, here, the adjusted split state set is also the second split state set.

In a step S406, according to weights of the splitting paths, a target splitting path of the tensor data of the target operator may be determined.

In a step S408, the target operator may be split according to the target splitting path to distribute the target operator to corresponding cores of the multi-core artificial intelligence processor for processing.

In the embodiments of the present disclosure, for specific implementations of the steps S404-S408, references may be made to the aforementioned steps S302-S306, which will not be repeated here.

By implementing the embodiments of the present disclosure, the glue operator may be inserted between the target operator and the split state set associated with the target operator. With the glue operator, each operator in the calculation graph corresponding to the neural network model may select the splitting method that acts on itself flexibly and unrestrictedly, thereby solving the problem that the operator splittings influence each other.

In the embodiments of the present disclosure, by introducing the glue operator, each operator may select an appropriate splitting method according to an actual situation. However, if the computer device runs the neural network model that includes the glue operator, since the glue operator may bring extra overheads, resource consumption of the computer device may be increased. For example, if the glue operator adopts a method of splitting-concatenation or concatenation-splitting, assuming that a total size of tensor data to be adjusted is M, and both the two phrases may not be skipped, and the operator must be concatenated or split on 4 dimensions in each phrase. For the ease of transplantation, the concatenation and the splitting may usually be implemented by using a built-in concat operator and a built-in split operator in a neural network algorithm. Since these two operators may only process one dimension every time, the entire glue, in the worst case, may bring about an 8M storage and read/write overhead. Therefore, it is required to find an optimal balance point between the adjustment of the split states and the introduction of the extra overheads; in other words, in the case of introducing as few glue operators as possible, in accordance with rules of the network structure, the splitting method of the operator may be adjusted in a reasonable place. This is a technical problem that the technical solutions of the present disclosure aim to solve.

Based on this, in the embodiments of the present disclosure, after the above-mentioned step S406 and before the step S408, a step S4010 may be included. The following will explain the step S4010 in detailed.

In a step S4010, if a case that in a same glue operator included in the target splitting path, the states of the input tensor data are the same as the states of the output tensor data is satisfied, a corresponding inserted glue operator may be deleted, and an optimized target splitting path may be obtained.

In the embodiments of the present disclosure, after the computer device determines the target splitting path according to the weights of the splitting paths, the computer device may judge whether in the same glue operator included in the target splitting path, the states of the input tensor data are the same as the states of the output tensor data, and if the case that in the same glue operator, the states of the input tensor data are the same as the states of the output tensor data is satisfied, the computer device may delete the glue operator. Here, the case that in the same glue operator, the states of the input tensor data are the same as the states of the output tensor data represents that using the glue operator at this position does not make any adjustment to the split states of the tensor data. As mentioned earlier, if the computer device runs the neural network model that includes the glue operator, since the glue operator may bring the extra overheads, the resource consumption of the computer device may be increased. If the case that in the same glue operator, the states of the input tensor data and the states of the output tensor data are the same is satisfied, by deleting the glue operator by the computer device, the resource consumption of the computer device may be reduced. Further, through this implementation, the extra overheads brought by introducing the glue operator and parallel efficiency of different splitting methods of the operator itself may be combined for decision, thereby obtaining an optimal splitting solution P based on the entire neural network.

Then, accordingly, after the computer device executes the above-mentioned step S304, which is to determine the target splitting path according to the weights of the splitting paths, the computer device may judge whether in the same glue operator included in the target splitting path, the states of the input tensor data are the same as the states of the output tensor data, and if the case that in the same glue operator, the states of the input tensor data are different from the states of the output tensor data is satisfied, the computer device may reserve the glue operator. In this case, here, the glue operator introduced may make the splitting method of each operator compatible with the splitting method of the tensor data directly associated with the operator. Through this implementation, the extra overheads brought by introducing the glue operator and the parallel efficiency of different splitting methods of the operator itself may be combined for decision, thereby obtaining the optimal splitting solution P based on the entire neural network.

Then, accordingly, in the embodiments of the present disclosure, if the computer device executes the above-mentioned step S306, the target operator may be split according to the optimized target splitting path. Here, a specific implementation of splitting the target operator may be described with reference to the above description, which will not be repeated here.

By implementing the embodiments of the present disclosure, by deleting the glue operator where the states of the input tensor data are the same as the states of the output tensor data in the target optimization path, the optimal balance point between the adjustment of the split states and the introduction of the extra overheads may be found. If the computer device executes the neural network model that is split according to the optimized target optimization path, the resource consumption of the computer device may be reduced.

In the embodiments of the present disclosure, considering that the neural network model has a multi-branch structure, in this case, it is required to solve the problem of the consistency of different branch splitting methods in a multi-branch neural network model. Operators located at the junction of branches have more than one piece of input tensor data, for example, a bitwise addition operator (Add), a bitwise multiplication operator (Mult), and a concatenation operator (Concat). For an operator A with two inputs, after the computer device accesses the operator, which means that the computer device determines the split state set of the output tensor data according to the split state set of the input tensor data, two pieces of input tensor data, which are tensorleft and tensorright, have corresponding split state sets, which are Sleft and Sright, respectively. A forward traversal may continue along two branch paths that start from the tensorleft and the tensorright respectively. In one case, the two branch paths may be extended directly until the end of the traversal, which means that the entire network has more than one piece of input data. This is usually not common in reasoning tasks. In another case, the two branch paths may be merged together at a certain operator. In either case, if the splitting solution P is determined, for the two pieces of input tensor data tensorleft and tensorright of the operator A, split states that do not match each other may be selected. Specifically, assuming that the operator A is a binary bitwise addition operator, in a backtracking process, a state that is selected in the split state set of the tensorleft may be a state that is only split in the C dimension, and a state that is selected in the split state set of the tensorright may be a state that is only split in the H dimension, and splitting methods of the addition operator itself represented by the two split states are inconsistent, which may cause the entire splitting solution P to be invalid.

In the embodiments of the present disclosure, a backtracking refers to an inverse process of a previous implementation process. For example, if the neural network model is traversed forward, the backtracking refers to traversing backward the neural network model. The backtracking process aims to make the computer device avoid misjudging in determining the target optimization path and further leading to negative effects such as an increase in time consumption when the computer device invokes the split neural network model.

In order to solve this problem, before the end of the traversal of the operator A, it is ensured that the split state sets corresponding to the tensorleft and the tensorright only include one split state, which may ensure the determinacy of the states selected in the two split state sets in the backtracking process.

In one case, in a forward traversal phrase, if the output tensor data of a current operator is regarded as the input tensor data by at least two operators, or the current operator has at least two pieces of output tensor data, one split state in the split state set of the output tensor data of the current operator may be reserved, and a reserved split state is determined according to a same directed edge of the current operator.

How to ensure the determinacy of the states selected in the two split state sets in the backtracking process in the embodiments of the present disclosure will be described in detailed in the following. The method includes but is not limited to the following steps.

In a step 700, the split state sets of the tensor data associated with the target operator may be determined according to the target operator in the calculation graph corresponding to the neural network model;

In a step 702, the split state sets may be traversed, and the splitting paths of the tensor data of the operator between adjacent split states may be determined;

In a step 704, the target splitting path of the tensor data of the target operator may be determined according to the weights of the splitting paths.

In a specific implementation, determining the target splitting path of the tensor data of the target operator may include:

traversing all split state sets of the tensor data of the target operator, and for a current split state set, traversing each split state to obtain all directed edges directing to a current split state and splitting paths from split states corresponding to starting points of the directed edges to the split states of the input tensor data of the target operator;

determining splitting paths from the current split state to the split states of the input tensor data of the target operator according to weights of the directed edges and weights of splitting paths from initial split states corresponding to the directed edges to the split states of the input tensor data of the target operator, where the weights of the splitting paths are determined according to the weights of all directed edges corresponding to the splitting paths; and

after all split state sets of the target operator are traversed, obtaining the target splitting path from the split state set of the input tensor data of the target operator to the split state set of the output tensor data of the target operator.

Here, this implementation is to obtain the target optimization path through the forward traversal.

In a step 706, the target operator may be split according to the target splitting path to distribute the target operator to corresponding cores of the multi-core artificial intelligence processor for processing.

In the embodiments of the present disclosure, in order to ensure the determinacy of the states selected in the two split state sets in the backtracking process, in the forward traversal phrase, if the output tensor data of the current operator is regarded as the input tensor data by at least two operators, or the current target operator has at least two pieces of output tensor data, one split state in the split state set of the output tensor data of the current operator may be reserved, and the reserved split state is determined according to the same directed edge of the current operator. Based on this, before the end of the traversal of branch operators, a state with the smallest accumulated weight in split state set of a plurality of pieces of input data may be selected to be reserved, and other split states in the split state set may be removed.

In the embodiments of the present disclosure, for specific implementations of the steps S700-S706, references may be made to the aforementioned steps S300-S306, which will not be repeated here.

In a possible implementation, by combining the introduction of the glue operator to adjust the split states in the split state set with the deletion of the glue operator when the states of the input tensor data are the same as the states of the output tensor data in the target optimization path, modifications of the method described in the steps S700-S706 may be obtained, which include but are not limited to the following steps:

in a step 700', the split state sets of the tensor data associated with the target operator may be determined according to the target operator in the calculation graph corresponding to the neural network model;

in a step 702', the glue operator may be inserted between the target operator and the first split state set associated with the target operator, and the split states in the split state set of the input tensor data of the target operator may be adjusted, and the second split state set may be obtained, where the glue operator is used to convert the split states obtained by splitting the tensor data according to one splitting method into the split states obtained by splitting the tensor data according to another splitting method;

in a step 704', the second split state set may be traversed, and the splitting paths of the tensor data of the target operator between the adjacent split state sets may be determined; and

in a step 706', the target splitting path of the tensor data of the target operator may be determined according to the weights of the splitting paths.

In a specific implementation, determining the target splitting path of the tensor data of the target operator may include:

traversing all split state sets of the tensor data of the target operator, and for the current split state set, traversing each split state to obtain all directed edges directing to the current split state and the splitting paths from split states corresponding to starting points of the directed edges to the split states of the input tensor data of the target operator;

determining the splitting paths from the current split state to the split states of the input tensor data of the target operator according to the weights of the directed edges and the weights of splitting paths from initial split states corresponding to the directed edges to the split states of the input tensor data of the target operator, where the weights of the splitting paths are determined according to the weights of all directed edges corresponding to the splitting paths; and

after all split state sets of the target operator are traversed, obtaining the target splitting path from the split state set of the input tensor data of the target operator to the split state set of the output tensor data of the target operator.

Here, this implementation is to obtain the target optimization path through the forward traversal.

In the embodiments of the present disclosure, in order to ensure the determinacy of the states selected in the two split state sets in the backtracking process, in the forward traversal phrase, if the output tensor data of the current target operator is regarded as the input tensor data by at least two operators, or the current target operator has at least two pieces of output tensor data, one split state in the split state set of the output tensor data of the current operator may be reserved, and the reserved split state is determined according to the same directed edge of the current operator. Based on this, before the end of the traversal of branch operators, the state with the smallest accumulated weight in split state set of the plurality of pieces of input data may be selected to be reserved, and other split states in the split state set may be removed.

In a step S708', if the case that in the same glue operator included in the target splitting path, the states of the input tensor data are the same as the states of the output tensor data is satisfied, the glue operator may be deleted and the optimized target splitting path may be obtained.

In a step S7010', the target operator may be split according to the optimized target splitting path to distribute the target operator to the corresponding cores of the multi-core artificial intelligence processor for processing.

In the embodiments of the present disclosure, for specific implementations of the steps S700'-S7010', references may be made to the aforementioned embodiments, which will not be repeated here.

By implementing the embodiments of the present disclosure, in the forward traversal phrase, for operators or output tensors that are located at branch points, the computer device may reserve only one state that corresponds to the shortest path so far and may delete all other states. Through this implementation, inconsistency that may appear in the backtracking phrase may be avoided, and the efficiency and accuracy of the computer device in determining the target optimization path may be improved.

In another case, in a backward traversal phrase, if the current target operator has at least two pieces of input tensor data, one split state in the split state set of the input tensor data of the operator may be reserved, and the split state is determined according to a same state path of the operator.

How to ensure the determinacy of the states selected in the two split state sets in the backtracking process in the embodiments of the present disclosure will be described in detailed in the following. The method includes but is not limited to the following steps.

In a step 800, the split state sets of the tensor data associated with the target operator may be determined according to the target operator in the calculation graph corresponding to the neural network model.

In a step 802, the split state sets may be traversed, and the splitting paths of the tensor data of the operator between the adjacent split states may be determined.

In a step 804, the target splitting path of the tensor data of the target operator may be determined according to the weights of the splitting paths.

In a specific implementation, determining the target splitting path of the tensor data of the target operator may include:

traversing all split state sets of the target operator, and for the current split state set, traversing each split state to obtain all directed edges starting from the current split state and the splitting paths from split states corresponding to ending points of the directed edges to the split states of the output tensor data of the target operator;

determining splitting paths from the current split state to the split states of the output tensor data of the target operator according to the weights of the directed edges and the weights of splitting paths from the split states corresponding to the ending points of the directed edges to the split states of the output tensor data of the target operator, where the weights of the splitting paths are determined according to the weights of all directed edges corresponding to the splitting paths; and

after all split state sets of the target operator are traversed, obtaining the target splitting path from the split state set of the input tensor data of the target operator to the split state set of the output tensor data of the target operator.

Here, this implementation is to obtain the target optimization path through the backward traversal.

In a step 806, the target operator may be split according to the target splitting path to distribute the target operator to the corresponding cores of the multi-core artificial intelligence processor for processing.

In the embodiments of the present disclosure, in order to ensure the determinacy of the states selected in the two split state sets in the backtracking process, in the backward traversal phrase, if the current target operator has at least two pieces of input tensor data, one split state in the split state set of the input tensor data of the current operator may be reserved, and the split state is determined according to the same directed edge of the operator. Based on this, before the end of the traversal of branch operators, the state with the smallest accumulated weight in split state set of the plurality of pieces of input data may be selected to be reserved, and other split states in the split state sets may be removed.

In a possible implementation, by combining the introduction of the glue operator to adjust the split states in the split state set with the deletion of the glue operator when the states of the input tensor data are the same as the states of the output tensor data in the target optimization path, modifications of the method of the steps S800-S806 may be obtained, which include but are not limited to the following steps:

in a step 800', the split state sets of the tensor data associated with the target operator may be determined according to the target operator in the calculation graph corresponding to the neural network model;

In a step 802', the glue operator may be inserted between the target operator and the first split state set associated with the target operator, and the split states in the split state set of the input tensor data of the target operator may be adjusted, and the second split state set may be obtained, where the glue operator is used to convert the split states obtained by splitting the tensor data according to one splitting method into the split states obtained by splitting the tensor data according to another splitting method;

in a step 804', the second split state set may be traversed, and the splitting paths of the tensor data of the target operator between the adjacent split state sets may be determined; and

in a step 806', the target splitting path of the tensor data of the target operator may be determined according to the weights of the splitting paths.

In a specific implementation, determining the target splitting path of the tensor data of the target operator may include:

traversing all split state sets of the target operator and for the current split state set, traversing each split state in the current split state set to obtain all directed edges starting from the current split state and the splitting path from the split states corresponding to the ending points of the directed edges to the split states of the output tensor data of the target operator; determining the splitting paths from the current split state to the split state of the output tensor data of the target operator according to the weights of the directed edges and the weights of the splitting paths from the split states corresponding to the ending points of the directed edges to the split states of the output tensor data of the target operator, where the weights of the splitting paths are determined according to the weights of all directed edges corresponding to the splitting paths; and after all split sets of the target operator are traversed, obtaining the target splitting path from the split state set of the input tensor data of the target operator to the split state set of the output tensor data of the target operator.

Here, this implementation is to obtain the target optimization path through the backward traversal.

In the embodiments of the present disclosure, in order to ensure the determinacy of the states selected in the two split state sets in the backtracking process, in the backward traversal phrase, if the current target operator has at least two pieces of input tensor data, one split state in the split state set of the input tensor data of the current operator may be reserved, and the split state is determined according to the same directed edge of the operator. Based on this, before the end of the traversal of branch operators, the state with the smallest accumulated weight in split state set of the plurality of pieces of input data may be selected to be reserved, and other split states in the split state sets may be removed.

In a step S808', if the case that in the same glue operator included in the target splitting path, the states of the input tensor data are the same as the states of the output tensor data is satisfied, the glue operator may be deleted, and the optimized target splitting path may be obtained.

In a step S8010', the target operator may be split according to the optimized target splitting path to distribute the target operator to the corresponding cores of the multi-core artificial intelligence processor for processing.

In the embodiments of the present disclosure, for the specific implementations of the steps S800'-S8010', references may be made to the aforementioned embodiments, which will not be repeated here.

By implementing the embodiments of the present disclosure, in the backward traversal phrase, for the operators or the output tensors that are located at branch points, the computer device may reserve only one state that corresponds to the shortest path so far and may delete all other states. Through this implementation, the inconsistency that may appear in the backtracking phrase may be avoided, and the efficiency and accuracy of the computer device in determining the target optimization path may be improved.

In order to facilitate understanding, the following exemplarily describes applicable application scenarios of the present disclosure.

Taking an autonomous driving application as an example, during an automatic driving process, a vehicle is required to analyze and process external information such as images, videos, and voices collected by an on-board sensor. In order to ensure safety, the vehicle must obtain an analytical result of the above-mentioned external information in the shortest time, so as to make decisions scientifically and effectively. Since a hardware system of the vehicle is equipped with a processing chip with a multi-core processor structure, according to the technical solutions of the present disclosure, the hardware system of the vehicle may split calculation tasks of processing small batches of external information in the neural network model to obtain a plurality of split sub-calculation tasks, and by distributing the split sub-calculation tasks evenly to the multiple processor cores, the plurality of split sub-calculation tasks may be executed in parallel on the multiple processor cores. This implementation may effectively complete processing of the external information and return a processing result, and an intelligent driving system of the vehicle may assist the vehicle in autonomous driving according to the returned result. It may be understood that in the technical solutions of the present disclosure, by splitting one operator into several sub-operators with smaller scales, the calculation library under the single-core structure may be invoked directly, which may make full use of the hardware resources of the multi-core processor, thereby avoiding the extra workloads brought by the reimplementation.

In the above-mentioned application scenario, the multi-core processor structure chip is set in the vehicle. In reality, the multi-core processor structure chip may be set in a cloud server, and the vehicle may send the external information such as images, videos and voices from the on-board sensor to the cloud server through 3G/4G, WIFI and other networks. Based on the technical solutions of the present disclosure, the cloud server may distribute the computational loads of processing small batches of external information in the neural network model evenly to the multiple processor cores. Within response time specified by vehicle driving, the cloud server may feed back the processing result to the vehicle through 3G/4G, WIFI and other networks. In reality, the scale of the external information collected by the on-board sensor is different. Before application, according to the external information with different scales, by using the technical solutions of the present disclosure, an on-board processor may determine a corresponding operator splitting path. By storing operator splitting solutions corresponding to the external information with different scales to corresponding areas, after the external information is obtained, the multi-core processor structure chip may invoke corresponding operator splitting paths to split the operators in the neural network model and distribute the computational loads of the external information evenly to the multiple processor cores.

It is required to be noted that for the sake of conciseness, the foregoing method embodiments are all described as a series of combinations of actions, but those skilled in the art should know that the present disclosure is not limited by the described order of action since the steps may be performed in a different order or simultaneously according to the present disclosure. Moreover, those skilled in the art should also understand that the embodiments described in the specification are all optional, and the actions and modules involved are not necessarily required for the present disclosure.

Further, it is required to be explained that though the steps in the flowchart of FIG. 3 are shown by following the direction of arrows, yet these steps may not necessarily be performed according to the order indicated by the arrows. Unless clearly stated herein, the order for performing these steps is not strictly restricted. These steps may be performed in a different order. Additionally, at least part of the steps shown in FIG. 3 may include a plurality of sub-steps or a plurality of stages. These sub-steps or stages may not necessarily be performed and completed at the same time, instead, these sub-steps or stages may be performed at different time. These sub-steps or stages may not necessarily be performed sequentially either, instead, these sub-steps or stages may be performed in turn or alternately with at least part of other steps, or sub-steps of other steps, or stages.

The foregoing describes the method of the embodiments of the present disclosure in detail. In order to facilitate better implementation of the above solutions of the embodiments of the present disclosure, correspondingly, related apparatuses for cooperating with the implementation of the foregoing solutions are also provided below.

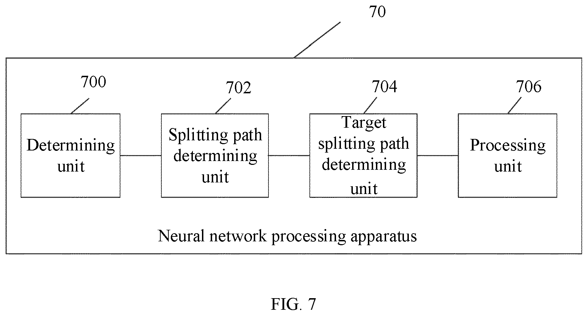

Referring to FIG. 7, FIG. 7 is a decoupling diagram of a neural network processing apparatus, according to an embodiment of the present disclosure. An apparatus 70 may at least include:

a determining unit 700 configured to determine split state sets of tensor data associated with a target operator according to the target operator in a calculation graph corresponding to a neural network model;
a splitting path determining unit 702 configured to traverse the split state sets and determine splitting paths of the tensor data of the target operator between adjacent split state sets;
a target splitting path determining unit 704 configured to determine a target splitting path of the tensor data of the target operator according to weights of the splitting paths; and
a processing unit 706 configured to split the target operator according to the target splitting path to distribute the target operator to corresponding cores of a multi-core artificial intelligence processor for processing.

In a possible implementation, the target splitting path determining unit 704 may be specifically configured to:

traverse all split state sets of the tensor data of the target operator, and for a current split state set, traverse each split state and obtain all directed edges directing to a current split state and splitting paths from split states corresponding to starting points of the directed edges to split states of input tensor data of the target operator;
determine splitting paths from the current split state to the split states of the input tensor data of the target operator according to weights of the directed edges and weights of splitting paths from initial split states corresponding to the directed edges to the split states of the input tensor data of the target operator, where the weights of the splitting paths are determined according to weights of all directed edges corresponding to the splitting paths; and
after all split state sets of the target operator are traversed, obtain a target splitting path from a split state set of the input tensor data of the target operator to a split state set of output tensor data of the target operator.

In a possible implementation, the target splitting path determining unit 704 may be specifically configured to:

traverse all split state sets of the target operator, and for the current split state set, traverse each split state to obtain all directed edges starting from the current split state and the splitting paths from the split states corresponding to ending points of the directed edges to the split states of the output tensor data of the target operator;

determine the splitting paths from the current split state to the split states of the output tensor data of the target operator according to the weights of the directed edges and the weights of splitting paths from the split states corresponding to the ending points of the directed edges to the split states of the output tensor data of the target operator, where the weights of the splitting paths are determined according to the weights of all directed edges corresponding to the splitting paths; and

after all split state sets of the target operator are traversed, obtain the target splitting path from the split state set of the input tensor data of the target operator to the split state set of the output tensor data of the target operator.

In a possible implementation, the apparatus 70 may also include a glue operator inserting unit 708, where the glue operator inserting unit 708 may be configured to insert a glue operator between the target operator and the split state set associated with the target operator and adjust the split states in the split state set, where the glue operator is used to convert the split state obtained by splitting the tensor data according to one splitting method into the split state obtained by splitting the tensor data according to another splitting method.

In a possible implementation, the glue operator inserting unit 708 may be specifically configured to:

select each inserted glue operator by using the target splitting path of the target operator in the calculation graph including the glue operator, and when a case that in the same glue operator included in the target splitting path, the split states of the input tensor data are the same as the split states of the output tensor data is satisfied, delete a corresponding inserted glue operator.

In a possible implementation, the glue operator is used to concatenate the split states in the split state set.

In a possible implementation, the glue operator is used to split the split states in the split state set.

In a possible implementation, the glue operator is used to concatenate the split states in the split state set first and then split the split states that are concatenated in the split state set.

In a possible implementation, the glue operator is used to split the split states in the split state set first and then concatenate the split states that are split in the split state set.

In a possible implementation, the apparatus 70 may also include a forward branch processing unit 7010, where the forward branch processing unit 7010 may be configured to, in a forward traversal phrase, when the output tensor data of the current target operator is regarded as the input tensor data by at least two operators, or the current target operator has at least two pieces of output tensor data, reserve one split state in the split state set of the output tensor data of the current operator, where a reserved split state is determined according to a same directed edge of the current operator.

In a possible implementation, the apparatus 70 may also include a backward branch processing unit 7012, where the backward branch processing unit 7012 may be configured to, in a backward traversal phrase, when the current target operator has at least two pieces of input tensor data, reserve one split state in the split state set of the input tensor data of the current operator, where the split state is determined according to the same directed edge of the operator.

In a possible implementation, the weights of the directed edges are determined according to a computational operational type of the target operator corresponding to the splitting path, a data scale of corresponding sub-data obtained by the tensor data of the target operator through the splitting path, and a throughput rate and a memory access bandwidth of each processor core.

In a possible implementation thereof, the split states in the split state set of the input tensor data of the target operator in the neural network model are determined according to computational logic of the operator and the split states in the split state set of corresponding output tensor data.

In a possible implementation thereof, the split states in the split state set of the output tensor data of the target operator in the neural network model are determined according to the computational logic of the operator and the split states in the split state set of corresponding input tensor data.

It should be understood that the foregoing apparatus embodiments are only exemplary, and the apparatus of the present disclosure may also be implemented in other ways. For example, a division of units/modules in the foregoing embodiment is only a logical function division, and there may be other division methods in actual implementations. For example, a plurality of units, modules, or components may be combined or integrated into another system, or some features may be omitted or not implemented.

The units or modules described as separation components may or may not be physically separated. The components described as units or modules may or may not be physical units; in other words, the components may be located in one apparatus, or may be distributed on a plurality of apparatuses. Solutions of the embodiments of the present disclosure may be implemented by selecting some or all of the units according to actual requirements.

The embodiments of the present disclosure also provide a chip, and a neural network chip may be a multi-core chip, including a CPU and a neural network processor (NNP) with N single cores, where N is an integer greater than 1. The CPU is used for overall control and scheduling of the chip and is the main body of execution of the neural network model processing method in the embodiments of the present disclosure.

The embodiments of the present disclosure also provide a computer device including the chip above or the neural network model processing apparatus 70 above.

The embodiments of the present disclosure also provide a computer storage medium for storing computer software instructions used by the computer device shown in FIG. 2 above, which includes a program for executing the aforementioned method embodiments. By executing the program that is stored, the tensor data associated with the target operator in the calculation graph corresponding to the neural network model may be split to obtain the split state sets corresponding to the tensor data, and the splitting paths of the tensor data between the adjacent split state sets and the weights of the splitting paths may be determined, and then the target splitting path of the tensor data of the target operator may be determined, and finally, according to the target splitting path, the target operator of the calculation graph may be split, so as to distribute the target operator to the corresponding cores of a multi-core processor for processing. In this process, by splitting the target operator, a purpose of reducing a computational data scale of the operator may be achieved, and then by selecting the splitting paths between the split states corresponding to the target operator, the splitting method of the target operator may be further optimized. Finally, by distributing the target operator obtained by splitting to the multi-core processor, hardware resources of each core in the multi-core processor may be effectively utilized. This solution may effectively reduce the end-to-end delay of various neural network models on the multi-core processor.

Those skilled in the art should understand that the embodiments of the present disclosure may be provided as a method, a system, or a computer program product. Therefore, the present disclosure may be implemented wholly in the form of hardware, or wholly in the form of software, or in the form of combining software and hardware. Additionally, the present disclosure may be implemented in the form of a computer program product that is implemented in one or more computer usable storage media (which include but are not limited to a magnetic disk storage and an optical storage, and the like) that store computer usable program codes.

The present disclosure is described according to the flowcharts and/or the block diagrams of the method, the device (system), and the computer program product of the embodiments of the present disclosure. It should be understood that each step and/or block of the flowcharts and/or the block diagrams, and a combination of a step and/or a block of the flowcharts and/or the block diagrams may be implemented by the computer program instructions. The computer program instructions may be provided to the processor of a general-purpose computer, a special-purpose computer, an embedded computer, or other programmable data processing devices for generating a machine, so that the instructions to be executed by the processor of the computer or the other programmable devices may generate an apparatus for realizing a specified function of a step or a plurality of steps in the flowcharts and/or one or more blocks in the block diagrams.

These computer program instructions may also be stored in a computer readable memory that may direct the computer or the other programmable data processing devices to work in a particular manner, so that the instructions stored in the computer readable memory may produce a product including an instruction device. The instruction device may implement the functions specified in one or more steps in the flowcharts and/or one or more blocks of the block diagrams.

These computer program instructions may also be loaded onto the computer or the other programmable data processing devices, so that a series of operational steps may be performed on the computer or the other programmable devices to generate computer-implemented processing. In this way, the instructions to be executed by the computer or the other programmable devices may provide steps of the functions specified in one or more steps in the flowcharts and/or one or more blocks of the block diagrams.

Further, the foregoing content may be better understood according to the following articles.

Article A1. A neural network processing method, where the method is applied to a multi-core artificial intelligence processor, and the method comprises:

determining split state sets of tensor data associated with a target operator according to the target operator in a calculation graph corresponding to a neural network model;
traversing the split state sets and determining splitting paths of the tensor data of the target operator between adjacent split state sets;
determining a target splitting path of the tensor data of the target operator according to weights of the splitting paths; and
splitting the target operator according to the target splitting path to distribute the target operator to corresponding cores of the multi-core artificial intelligence processor for processing.

Article A2. The method of article A1, where determining the target splitting path of the tensor data of the target operator includes:

traversing all split state sets of the tensor data of the target operator, and for a current split state set, traversing each split state and obtaining all directed edges directing to a current split state and splitting paths from split states corresponding to starting points of the directed edges to split states of input tensor data of the target operator;

determining splitting paths from the current split state to the split states of the input tensor data of the target operator according to weights of the directed edges and weights of splitting paths from initial split states corresponding to the directed edges to the split states of the input tensor data of the target operator, where the weights of the splitting paths are determined according to weights of all directed edges corresponding to the splitting paths; and

after all split state sets of the target operator are traversed, obtaining a target splitting path from split state sets of the input tensor data of the target operator to split state sets of output tensor data of the target operator.

Article A3. The method of article A1, where determining the target splitting path of the tensor data of the target operator includes:

traversing all split state sets of the target operator, and for a current split state set, traversing each split state and obtaining all directed edges starting from a current split state and splitting paths from split states corresponding to ending points of the directed edges to split states of output tensor data of the target operator;

determining splitting paths from the current split state to the split states of the output tensor data of the target operator according to weights of the directed edges and weights of splitting paths from the split states corresponding to the ending points of the directed edges to the split states of the output tensor data of the target operator, where the weights of the splitting paths are determined according to weights of all directed edges corresponding to the splitting paths; and

after all split state sets of the target operator are traversed, obtaining a target splitting path from split state sets of input tensor data of the target operator to split state sets of the output tensor data of the target operator.

Article A4. The method of any one of articles A1-A3, further comprising:
inserting a glue operator between the target operator and a split state set associated with the target operator and adjusting split states in the split state set, where the glue operator is used to convert split states obtained by splitting the tensor data according to one splitting method into split states obtained by splitting the tensor data according to another splitting method.

Article A5. The method of article 4, where inserting the glue operator between the target operator and the split state set associated with the target operator includes:
selecting each inserted glue operator by using the target splitting path of the target operator in the calculation graph including the glue operator, and when the case that in a same glue operator included in the target splitting path, split states of input tensor data are the same as split states of output tensor data is satisfied, deleting a corresponding inserted glue operator.

Article A6. The method of article A1, where a glue operator is used to concatenate split states in a split state set.

Article A7. The method of article A1, where a glue operator is used to split split states in a split state set.

Article A8. The method of article A1, where a glue operator is used to concatenate split states in a split state set first and then split split states that are concatenated in the split state set.

Article A9. The method of article A1, where a glue operator is used to split split states in a split state set first and then concatenate split states that are split in the split state set.

Article A10. The method of any one of articles A1-A9, further comprising:
in a forward traversal phrase, when the output tensor data of a current operator is regarded as the input tensor data by at least two operators, or the current operator has at least two pieces of output tensor data, reserving one split state in the split state set of the output tensor data of the current operator, where a reserved split state is determined according to a same directed edge of the current operator.

Article A11. The method of any one of articles A1-A9, further comprising:
in a backward traversal phrase, when a current operator has at least two pieces of input tensor data, reserving one split state in the split state set of the input tensor data of the current operator, where the split state is determined according to a same directed edge of the current operator.

Article A12. The method of article A2 or article A3, where the weights of the directed edges are determined according to a computational operational type of the target operator corresponding to the splitting path, a data scale of corresponding sub-data obtained by the tensor data of the target operator through the splitting path, and a throughput rate and a memory access bandwidth of each processor core.

Article A13. The method of article A1, where split states in a split state set of input tensor data of the target operator are determined according to computational logic of the target operator and the split states in the split state set of corresponding output tensor data.

Article A14. The method of article A1, where split states in a split state set of output tensor data of the target operator are determined according to computational logic of the target operator and the split states in the split state set of corresponding input tensor data.

Article B1. A neural network processing apparatus, where the apparatus is applied to a multi-core artificial intelligence processor, and the apparatus comprises:

a determining unit configured to determine split state sets of tensor data associated with a target operator according to the target operator in a calculation graph corresponding to a neural network model;

a splitting path determining unit configured to traverse the split state sets and determine splitting paths of the tensor data of the target operator between adjacent split state sets;

a target splitting path determining unit configured to determine a target splitting path of the tensor data of the target operator according to weights of the splitting paths; and

a processing unit configured to split the target operator according to the target splitting path to distribute the target operator to corresponding cores of the multi-core artificial intelligence processor for processing.

Article C1. A computer device, including a plurality of heterogeneous processors and a memory that are connected to each other, where the plurality of heterogeneous processors include a general-purpose processor and an artificial intelligence processor, and the memory is configured to store a computer program, and the computer program includes a program instruction, and the processors are configured to invoke the program instruction and perform the method of any one of articles A1-A14.

Article D1. A computer-readable storage medium, on which a computer program is stored, where the computer program includes a program instruction, and the program instruction enables a processor to perform the method of any one of articles A1-A14 when the program instruction is executed by the processor.

The embodiments of the present disclosure have been described in detail above. Specific examples have been used in the specification to explain the principles and implementations of the present disclosure. The descriptions of the above embodiments are only used to facilitate understanding of the method and core ideas of the present disclosure. Persons of ordinary skill in the art may change or transform the specific implementations and application scope according to the ideas of the present disclosure. The changes and transformations shall all fall within the protection scope of the present disclosure. In summary, the content of this specification should not be construed as a limitation on the present disclosure.

**Claims**

1. A neural network model processing method applied to a multi-core artificial intelligence processor, comprising:

determining split state sets of tensor data associated with a target operator according to the target operator in a calculation graph corresponding to a neural network model;

traversing the split state sets and determining splitting paths of the tensor data of the target operator between adjacent split state sets;

determining a target splitting path of the tensor data of the target operator according to weights of the splitting paths; and

splitting the target operator according to the target splitting path to distribute the target operator to corresponding cores of the multi-core artificial intelligence processor for processing.

2. The method of claim 1, wherein determining the target splitting path of the tensor data of the target operator includes:

traversing all split state sets of the tensor data of the target operator, and for a current split state set, traversing each split state and obtaining all directed edges directing to a current split state and splitting paths from split states corresponding to starting points of the directed edges to split states of input tensor data of the target operator;

determining splitting paths from the current split state to the split states of the input tensor data of the target operator according to weights of the directed edges and weights of splitting paths from initial split states corresponding to the directed edges to the split states of the input tensor data of the target operator, wherein the weights of the splitting paths are determined according to weights of all directed edges corresponding to the splitting paths; and

after all split state sets of the target operator are traversed, obtaining a target splitting path from split state sets of the input tensor data of the target operator to split state sets of output tensor data of the target operator.

3. The method of claim 1, wherein determining the target splitting path of the tensor data of the target operator includes:

traversing all split state sets of the target operator, and for a current split state set, traversing each split state and obtaining all directed edges starting from a current split state and splitting paths from split states corresponding to ending points of the directed edges to split states of output tensor data of the target operator;

determining splitting paths from the current split state to the split states of the output tensor data of the target operator according to weights of the directed edges and weights of splitting paths from the split states corresponding to the ending points of the directed edges to the split states of the output tensor data of the target operator, wherein the weights of the splitting paths are determined according to weights of all directed edges corresponding to the splitting paths; and

after all split state sets of the target operator are traversed, obtaining a target splitting path from split state sets of input tensor data of the target operator to split state sets of the output tensor data of the target operator.

4. The method of any one of claims 1-3, further comprising:
inserting a glue operator between the target operator and a split state set associated with the target operator and adjusting split states in the split state set, wherein the glue operator is used to convert split states obtained by splitting the tensor data according to one splitting method into split states obtained by splitting the tensor data according to another splitting method.

5. The method of claim 4, wherein inserting the glue operator between the target operator and the split state set associated with the target operator includes:
selecting each inserted glue operator by using the target splitting path of the target operator in the calculation graph including the glue operator, and when the case that in a same glue operator included in the target splitting path, split states of input tensor data are the same as split states of output tensor data is satisfied, deleting a corresponding inserted glue operator.

6. The method of claim 4, wherein the glue operator is used to concatenate the split states in the split state set.

7. The method of claim 4, wherein the glue operator is used to split the split states in the split state set.

8. The method of claim 4, wherein the glue operator is used to concatenate the split states in the split state set first and then split split states that are concatenated in the split state set.

9. The method of claim 4, wherein the glue operator is used to split the split states in the split state set first and then concatenate split states that are split in the split state set.

10. The method of any one of claims 1-9, further comprising:
in a forward traversal phrase, when the output tensor data of a current operator is regarded as the input tensor data by at least two operators, or the current operator has at least two pieces of output tensor data, reserving one split state in the split state set of the output tensor data of the current operator, wherein a reserved split state is determined according to a same directed edge of the current operator.

11. The method of any one of claims 1-9, further comprising:
in a backward traversal phrase, when a current operator has at least two pieces of input tensor data, reserving one split state in the split state set of the input tensor data of the current operator, wherein the split state is determined according to a same directed edge of the current operator.

12. The method of claim 2 or claim 3, wherein the weights of the directed edges are determined according to a computational operational type of the target operator corresponding to the splitting path, a data scale of corresponding sub-data obtained by the tensor data of the target operator through the splitting path, and a throughput rate and a memory access bandwidth of each processor core.

13. The method of claim 1, wherein split states in a split state set of input tensor data of the target operator are determined according to computational logic of the target operator and the split states in the split state set of corresponding output tensor data.

14. The method of claim 1, wherein split states in a split state set of output tensor data of the target operator are determined according to computational logic of the target operator and the split states in the split state set of corresponding input tensor data.

15. A neural network model processing apparatus applied to a multi-core artificial intelligence processor, comprising:

a determining unit configured to determine split state sets of tensor data associated with a target operator according to the target operator in a calculation graph corresponding to a neural network model;
a splitting path determining unit configured to traverse the split state sets and determine splitting paths of the tensor data of the target operator between adjacent split state sets;
a target splitting path determining unit configured to determine a target splitting path of the tensor data of the target operator according to weights of the splitting paths; and
a processing unit configured to split the target operator according to the target splitting path to distribute the target operator to corresponding cores of the multi-core artificial intelligence processor for processing.

16. A chip, wherein the chip integrates the neural network model processing apparatus of claim 15.

17. A computer device, wherein the computer device includes the chip of claim 16 or the neural network model processing apparatus of claims 15.

18. A computer device, including processors and a memory that are connected to each other, wherein the processors include a general-purpose processor and an artificial intelligence processor, the memory is configured to store a computer program, the computer program includes a program instruction, and the processors are configured to invoke the program instruction and perform the method of any one of claims 1-14.

19. A computer-readable storage medium, on which a computer program is stored, wherein the computer program includes a program instruction, and the program instruction enables a processor to perform the method of any one of claims 1-14 when the program instruction is executed by the processor.

20. A computer program product, wherein the computer program product includes a non-transitory computer-readable storage medium storing a computer program, and the computer program is executed to enable a computer to perform the method of any one of claims 1-14.

| Computing core1 | Computing core1 | Computing core1 | Computing core1 |
|---|---|---|---|

Shared storage

FIG. 1A

100 — Artificial intelligence application

102 — Artificial intelligence framework

104 — Artificial intelligence learning library

106 — Artificial intelligence runtime library

108 — Driver

FIG. 1B

201 Processor

205 Artificial intelligence processor

203

202 Memory

204 Communication interface

Computer device

FIG. 2

Determine split state sets of tensor data associated with a target operator according to the target operator in a calculation graph corresponding to a neural network model　S300

Traverse the split state sets and determine splitting paths of the tensor data of the target operator between adjacent split state sets　S302

Determine a target splitting path of the tensor data of the target operator according to weights of the splitting paths　S304

Split the target operator according to the target splitting path to distribute the target operator to corresponding cores of a multi-core artificial intelligence processor for processing　S306

FIG. 3

Input
[0,n]
[0,ic]
[0,ih]
[0,iw]

Weight
[0,oc]
[0,ic]
[0,kh]
[0,kw]

Convolutional operator

Output
[0,n]
[0,oc]
[0,oh]
[0,ow]

FIG. 4

```
┌──────────────┐   ┌──────────────┐   ┌──────────────┐
│    Input     │   │    Input     │   │    Weight    │
│   [0,n/2]    │   │   [n/2,n]    │   │    [0,oc]    │
│   [0,ic/2]   │   │   [ic/2,ic]  │   │    [0,ic]    │
│    [0,ih]    │   │    [0,ih]    │   │    [0,kh]    │
│    [0,iw]    │   │    [0,iw]    │   │    [0,kw]    │
└──────────────┘   └──────────────┘   └──────────────┘
```

```
   ╭──────────────╮        ╭──────────────╮
   │ Convolutional│        │ Convolutional│
   │   operator   │        │   operator   │
   ╰──────────────╯        ╰──────────────╯
```

```
   ┌──────────────┐        ┌──────────────┐
   │   Part of    │        │   Part of    │
   │   output     │        │   output     │
   │   [0,n/2]    │        │   [n/2,n]    │
   │    [0,oc]    │        │    [0,oc]    │
   │    [0,oh]    │        │    [0,oh]    │
   │    [0,ow]    │        │    [0,ow]    │
   └──────────────┘        └──────────────┘
```

FIG. 5A

```
┌──────────────┐   ┌──────────────┐   ┌──────────────┐
│    Input     │   │    Weight    │   │    Weight    │
│    [0,n]     │   │   [0,oc/2]   │   │   [oc/2,oc]  │
│    [0,ic]    │   │    [0,ic]    │   │    [0,ic]    │
│    [0,ih]    │   │    [0,kh]    │   │    [0,kh]    │
│    [0,iw]    │   │    [0,kw]    │   │    [0,kw]    │
└──────────────┘   └──────────────┘   └──────────────┘
```

```
   ╭──────────────╮        ╭──────────────╮
   │ Convolutional│        │ Convolutional│
   │   operator   │        │   operator   │
   ╰──────────────╯        ╰──────────────╯
```

```
   ┌──────────────┐        ┌──────────────┐
   │   Part of    │        │   Part of    │
   │   output     │        │   output     │
   │    [0,n]     │        │    [0,n]     │
   │   [0,oc/2]   │        │   [oc/2,oc]  │
   │    [0,oh]    │        │    [0,oh]    │
   │    [0,ow]    │        │    [0,ow]    │
   └──────────────┘        └──────────────┘
```

FIG. 5B

Input
[0,n]
[0,ic/2]
[0,ih]
[0,iw]

Input
[0,n]
[ic/2,ic]
[0,ih]
[0,iw]

Weight
[0,oc]
[0,ic]
[0,kh]
[0,kw]

Convolutional
operator

Convolutional
operator

Part of
output
[0,n]
[0,oc]
[0,oh]
[0,ow]

Part of
output
[0,n]
[0,oc]
[0,oh]
[0,ow]

Accumulation

Output
[0,n]
[0,oc]
[0,oh]
[0,ow]

FIG. 5C

Input
[0,n]
[0,ic]
[0,ih/2]
[0,iw]

Input
[0,n]
[ic,ic]
[ih/2,ih]
[0,iw]

Weight
[0,oc]
[0,ic]
[0,kh]
[0,kw]

Convolutional
operator

Convolutional
operator

Part of
output
[0,n]
[0,oc]
[0,oh/2]
[0,ow]

Part of
output
[0,n]
[0,oc]
[oh/2,oh]
[0,ow]

FIG. 5D

Input
[0,n]
[0,ic]
[0,ih]
[0,iw/2]

Input
[0,n]
[ic,ic]
[ih,ih]
[iw/2,iw]

Weight
[0,oc]
[0,ic]
[0,kh]
[0,kw]

Convolutional
operator

Convolutional
operator

Part of
output
[0,n]
[0,oc]
[0,oh/2]
[0,ow]

Part of
output
[0,n]
[0,oc]
[oh/2,oh]
[0,ow]

FIG. 5E

```
┌─────────────────────────────┐
│   Convolutional layer       │
│        conv_1               │
└─────────────────────────────┘
              │
              ▼
┌─────────────────────────────┐
│   Pooling layer    pool_1   │
└─────────────────────────────┘
              │
              ▼
┌─────────────────────────────┐
│   Convolutional layer       │
│        conv_2               │
└─────────────────────────────┘
              │
              ▼
┌─────────────────────────────┐
│   Pooling layer    pool_2   │
└─────────────────────────────┘
              │
              ▼
┌─────────────────────────────┐
│   Fully-connected layer 1   │
└─────────────────────────────┘
              │
              ▼
┌─────────────────────────────┐
│   Fully-connected layer 2   │
└─────────────────────────────┘
```

FIG. 5F

Convolutional layer    conv_1

↓

Activation function    Relu

↓

Largest pooling layer    pool_1

↓

Convolutional layer    conv_2

↓

Activation function    Relu

↓

Largest pooling layer    pool_2

↓

Convolutional layer    conv_3

↓

Activation function    Relu

↓

Largest pooling layer    pool_3

Convolutional layer    conv_4

↓

Activation function    Relu

↓

Largest pooling layer    pool_4

↓

Convolutional layer    conv_5

↓

Activation function    Relu

↓

Largest pooling layer    pool_5

↓

Fully-connected layer    fc_1

↓

Softmax    classifier

↓

Output layer

FIG. 5G

FIG. 5H

FIG. 6A

FIG. 6B

C=c0+c1+c2

FIG. 6C

C=c0+c1+c2

Split

co

c1

c2

FIG. 6D

FIG. 6E

FIG. 6F

70

| 700 | 702 | 704 | 706 |
|---|---|---|---|
| Determining unit | Splitting path determining unit | Target splitting path determining unit | Processing unit |

Neural network processing apparatus

FIG. 7

**INTERNATIONAL SEARCH REPORT**

International application No.

**PCT/CN2020/116816**

**A.    CLASSIFICATION OF SUBJECT MATTER**

G06N 3/04(2006.01)i

According to International Patent Classification (IPC) or to both national classification and IPC

**B.    FIELDS SEARCHED**

Minimum documentation searched (classification system followed by classification symbols)

G06N 3

Documentation searched other than minimum documentation to the extent that such documents are included in the fields searched

Electronic data base consulted during the international search (name of data base and, where practicable, search terms used)

CNABS, CNKI, DWPI, SIPOABS, IEEE: 神经网络, 算子, 运算, 层, 拆分, 数据, 状态, 路径, 多, 核, 处理器, neural network, operator, operation, layer, split, data, state, path, multiple, core, processor, CPU, GPU

**C.    DOCUMENTS CONSIDERED TO BE RELEVANT**

| Category* | Citation of document, with indication, where appropriate, of the relevant passages | Relevant to claim No. |
|---|---|---|
| PX | CN 110689115 A (SHANGHAI CAMBRICON INFORMATION TECHNOLOGY CO., LTD.) 14 January 2020 (2020-01-14) claims 1-17 | 1-20 |
| X | CN 109993299 A (ZTE CORPORATION) 09 July 2019 (2019-07-09) description, paragraphs [0001]-[0098], and figures 3-7 | 1-20 |
| X | CN 109426553 A (SHANGHAI CAMBRICON INFORMATION TECHNOLOGY CO., LTD.) 05 March 2019 (2019-03-05) description, paragraphs [0039]-[0127] | 1-20 |
| A | CN 107862378 A (VERISILICON MICROELECTRONICS (SHANGHAI) CO., LTD. et al.) 30 March 2018 (2018-03-30) entire document | 1-20 |
| A | CN 106155635 A (BEIJING QIHOO TECHNOLOGY CO., LTD. et al.) 23 November 2016 (2016-11-23) entire document | 1-20 |
| A | US 2019138891 A1 (SAMSUNG ELECTRONICS CO., LTD.) 09 May 2019 (2019-05-09) entire document | 1-20 |

☐ Further documents are listed in the continuation of Box C.    ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **15 December 2020** | **25 December 2020** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/116816**

| Patent document cited in search report | | | Publication date (day/month/year) | Patent family member(s) | | | Publication date (day/month/year) |
|---|---|---|---|---|---|---|---|
| CN | 110689115 | A | 14 January 2020 | None | | | |
| CN | 109993299 | A | 09 July 2019 | WO | 2019128475 | A1 | 04 July 2019 |
| | | | | EP | 3734475 | A1 | 04 November 2020 |
| | | | | US | 20200342322 | A1 | 29 October 2020 |
| CN | 109426553 | A | 05 March 2019 | US | 2020089534 | A1 | 19 March 2020 |
| | | | | WO | 2019001418 | A1 | 03 January 2019 |
| | | | | CN | 109117415 | A | 01 January 2019 |
| | | | | CN | 109214616 | A | 15 January 2019 |
| CN | 107862378 | A | 30 March 2018 | CN | 107862378 | B | 24 April 2020 |
| CN | 106155635 | A | 23 November 2016 | CN | 106155635 | B | 18 September 2020 |
| US | 2019138891 | A1 | 09 May 2019 | KR | 20190052893 | A | 17 May 2019 |

Form PCT/ISA/210 (patent family annex) (January 2015)